# EUROPÄISCHE PATENTANMELDUNG

(11) **EP 4 844 509 A1**
(43) Veröffentlichungstag der Anmeldung: **25.11.2026**
(21) Anmeldenummer: 26156138.5
(22) Anmeldetag: 03.02.2026
(51) Int. Cl.: G05B 19/418, B29D 30/00, B29D 30/38, B29D 30/42, B29D 30/46

(54) **FERTIGUNGSANLAGE FÜR GÜRTEL- UND/ODER KARKASSENBAND IN DER REIFENINDUSTRIE SOWIE VERFAHREN ZUM BETRIEB EINER SOLCHEN FERTIGUNGSANLAGE**

(30) Priorität: 13.02.2025 DE 102025105489
(71) Anmelder: Fischer TireTech Germany GmbH, 96224 Burgkunstadt (DE)
(72) Erfinder: Schmidt, Frank, 95349 Thurnau (DE); Lindner, Stefan, 95326 Kulmbach (DE)
(74) Vertreter: Lindner Blaumeier Patent- und Rechtsanwälte

(57) **Zusammenfassung**

Fertigungsanlage für Gürtel- und/oder Karkassenband in der Reifenindustrie, aufweisend mehrere materialbearbeitende, in Abhängigkeit von Betriebsparametern ansteuerbare Fertigungskomponenten, eine Steuereinrichtung (26) zur Ansteuerung der Fertigungskomponenten und eine Bedieneinrichtung (27), wobei die Steuereinrichtung (26) ein Speichermittel (29) aufweist, in dem wenigstens ein festgelegter Basissatz von einstellbaren Betriebsparametern der Fertigungskomponenten gespeichert ist, und ausgebildet ist, in Abhängigkeit wenigstens einer Benutzereingabe an der Bedieneinrichtung (27) und/oder automatisch den Basissatz zur Ansteuerung auszuwählen, wobei die Steuereinrichtung (26) ferner ausgebildet ist, zusätzlich zu dem Basissatz wenigstens einen in einem Lernprozess ermittelten, veränderbaren Lernsatz von einstellbaren Betriebsparametern in dem Speichermittel (29) abzuspeichern, der in Abhängigkeit wenigstens einer Benutzereingabe an der Bedieneinrichtung (27) und/oder automatisch zur Ansteuerung auswählbar ist.

## Beschreibung

Die Erfindung betrifft eine Fertigungsanlage für Gürtel- und/oder Karkassenband in der Reifenindustrie, aufweisend mehrere materialbearbeitende, in Abhängigkeit von Betriebsparametern ansteuerbare Fertigungskomponenten, eine Steuereinrichtung zur Ansteuerung der Fertigungskomponenten und eine Bedieneinrichtung, wobei die Steuereinrichtung ein Speichermittel aufweist, in dem wenigstens ein festgelegter Basissatz von einstellbaren Betriebsparametern der Fertigungskomponenten gespeichert ist, und ausgebildet ist, in Abhängigkeit wenigstens einer Benutzereingabe an der Bedieneinrichtung und/oder automatisch den Basissatz zur Ansteuerung auszuwählen. Daneben betrifft die Erfindung ein Verfahren zum Betrieb einer solche Fertigungsanlage.

Fertigungsanlagen, in denen ein Ausgangsband, insbesondere klebriges Cordband, zu einem Endlosband als Fertigungsprodukt, das als Gürtelband oder Karkassenband in der Reifenindustrie verwendet wird, verarbeitet wird, sind im Stand der Technik grundsätzlich bekannt. Sie können - je nach Einsatzweck - auch als Gürtelanlage bzw. Karkassenanlage bezeichnet werden. Die Fertigungsanlage kann insgesamt auch als Maschine oder Einrichtung zur Verarbeitung eines Cordbands in der Reifenindustrie verstanden werden. Von dem Ausgangsband, insbesondere dem klebrigen Cordband, sei es ein Textilcordband oder ein Stahlcordband, werden Bandabschnitte abgetrennt und durch Spleißen ein Endlosband gefertigt. Das Ausgangsband ist üblicherweise zu einer Rolle gewickelt und in eine Abwickelstation aufgenommen, aus der es ausgewickelt wird und zunächst einer Schere, also einer Schneideinrichtung, zugeführt wird, in der von dem Ausgangsband einzelne Bandabschnitte geschnitten werden. Eine solche Schneideinrichtung ist beispielsweise aus DE 20 2013 103 082 U1 bekannt. Die vorlaufende Kante des Ausgangsbands wird mit einer als Rückzugeinrichtung ausgebildeten Fördereinrichtung wie beispielsweise einer Zange erfasst und durch die Schneidvorrichtung, beispielsweise eine Schlagschere umfassend ein feststehendes Untermesser und ein bewegliches Obermesser, gezogen, wobei über die Ziehlänge die Breite des zu schneidenden Bandabschnitts definiert wird. Eine solche Fördereinrichtung respektive Zange ist beispielsweise in DE 20 2013 102 341 U1 beschrieben. Der geschnittene Bandabschnitt wird von einem Förderband als weitere Fördereinrichtung aufgenommen, über das das Ausgangsband vor dem Schnitt mittels der Rückzugeinrichtung, also der Zange, gezogen wird, und über welches Förderband der jeweils geschnittene Bandabschnitt zu einer Spleißeinrichtung transportiert wird, in der die geschnittenen Bandabschnitte zu einem Endlosband aneinander gespleißt werden, jedoch mit unterschiedlicher Orientierung, verglichen mit dem Ausgangsband. In der Spleißeinrichtung wird die nachlaufende Kante des zuvor an das Endlosband angespleißten Bandabschnitts und die vorlaufende Kante des über das Förderband herangeförderten Bandabschnitts bezüglich einander positioniert, wonach mittels einer Spleißvorrichtung der Spleißeinrichtung die beiden Kanten miteinander verspleißt werden. Die Spleißvorrichtung weist hierzu beispielsweise ein Spleißwerkzeug, das einen Spleißkopf bzw. mehrere Spleißköpfe umfassen kann, auf. Dabei wird der Spleißkopf bzw. werden die Spleißköpfe den zuvor zueinander positionierten Kanten von oben zugeführt. Nach dem jeweiligen Aufsetzen der Spleißköpfe wird linear, im Verlauf der Spleißlinie, im angedrückten Zustand über das Bandmaterial in Richtung zu den seitlichen Bandkanten über das Bandmaterial gezogen. Die Spleißköpfe können lose laufen oder angetrieben sein. Bei dem Ziehen über das Bandmaterial wird dieses verdichtet und somit verspleißt. Auf diese Weise kann durch Aneinanderspleißen einer Vielzahl einzelner Bandabschnitte ein Endlosband hergestellt werden. Eine solche Spleißeinrichtung ist beispielsweise aus DE 20 2014 101 735 U1 bekannt.

In einer Aufwickelstation kann das Fertigungsprodukt dann aufwickelt werden, wobei nach der Spleißeinrichtung optional weitere Fertigungskomponten vorgesehen sein können, um das zusammengespleißte Endlosband zu bearbeiten. Beispielsweise kann die Fertigungsanlage einen Slitter und/oder eine Belegevorrichtung umfassen. In einer Belegevorrichtung kann ein gummiertes Band auf das Cordband als zusammengespleißtes Endlosband aufgebracht werden. Eine solche Belegestation hat die Aufgabe, die erzeugte Materialbahn, hier das zusammengespleißte Cordband, während des Herstellungsprozesses mit zusätzlichen Materialstreifen zu verstärken. Dabei werden Gummiprofilstreifen in Materialförderrichtung auf die zu verstärkende Materialbahn mittig und/oder versetzt aufgelegt. Dieser Vorgang verläuft kontinuierlich mit der Anlagengeschwindigkeit. Das Auflegen kann von oben und/oder von unten erfolgen. Des Weiteren werden häufig die Außenkanten der Materialbahn eingefasst, d.h. ein Gummistreifen wird von der Außenkante mit Überstand aufgelegt und um die Gummikante herumgelegt, um die an der Außenkante (= Schnittkante) freiliegenden Cordfäden zu ummanteln. Eine Belegevorrichtung wird beispielhaft durch DE 20 2014 101 731 U1 offenbart.

Bei der Fertigungskomponente Slitter handelt es sich um eine Längsteilvorrichtung, das heißt, die Materialbahn, hier das zusammengespleißte Endlosband, wird im Produktionsprozess bei Bedarf in mindestens zwei Materialstreifen getrennt. Dies dient zur Erhöhung der Ausbringung einer Fertigungsanlage. Als Slittermesser finden meistens Rundmesser Verwendung. Der Trennvorgang ist ein Schneiden der Materialbahn. In der Praxis findet die Bezeichnung "Slittern" ihre Anwendung. Die Fertigungskomponente Slitter ist konzipiert, um ein zugeführtes Endlosband in mindestens zwei oder mehrere Bandstreifen zu trennen. Die Materialbahn wird hierbei in definierte Materialbreiten geschnitten, welche gleiche oder unterschiedliche Bandstreifen erzielen. Slitter sind beispielsweise in DE 20 2013 104 649 U1, DE 20 2013 104 651 U1 und DE 20 2013 104 653 U1 beschrieben.

Die Beschreibung eines Fertigungsprodukts, das in einem Fertigungsprozess mittels einer solchen Fertigungsanlage angefertigt werden soll, wird durch einen Betriebsparametersatz von für diesen Fertigungsprozess unveränderlichen Betriebsparameters vorgegeben, der üblicherweise als Rezept oder MES bezeichnet wird. Neben einer allgemeinen Rezept-Identifikation (Rezept-ID) kann ein Rezept beispielsweise den in der Schere anzuwendenden Schnittwinkel und die gewünschte Breite der als Gürtelband oder Karkassenband erhaltenen Materialbahnen umfassen. Auch ein Typ des zu verwendenden Ausgangsbandes kann durch das Rezept beschrieben sein. Ein Rezept wird also hauptsächlich durch die Anforderungen an das Fertigungsprodukt beschrieben und ist von der konkreten Fertigungsanlage unabhängig. Es kann allerdings Anforderungen an die Fertigungsgeschwindigkeit und/oder die Ausbringung, also die produzierte Menge pro Zeiteinheit, enthalten.

Die Qualität des erhaltenen Fertigungsprodukts, hier also des Endlos-Gürtelbandes oder Endlos-Karkassenbandes, ist, wie sich gezeigt hat, von einer Vielzahl von Faktoren abhängig. Zunächst ist jede Fertigungsanlage individuell. Einstellbare Betriebsparameter, die für ein Rezept zur konkreten Ansteuerung der Fertigungskomponenten verwendet werden, werden, insbesondere rezeptspezifisch, herstellerseitig häufig in einem Basissatz von Betriebsparametern mitgeliefert. Sie erlauben eine Fertigung des Gürtel- bzw. Karkassenbandes innerhalb hinreichender Toleranzen, aber nicht auf vollständig optimale Art und Weise. Anders gesagt werden die Betriebsparameter des Basissatzes, also Default-Parameter, von dem Hersteller mitgegeben und sorgen dafür, dass der Prozess stabil läuft und akzeptable Qualität liefert. Eine Verbesserung bzw. Optimierung erfolgt für verschiedene Rezepte beispielsweise durch den Bediener, der durch "Trial and Error" oder aufgrund tiefgehender Kenntnis der Fertigungsanlage Anpassungen ausgehend von den Betriebsparametern des Basissatzes vornehmen kann. Solche Mitarbeiter mit einer enormen Erfahrung an bestimmten Fertigungsanlagen und das entsprechende Know-How werden jedoch seltener. Für einzelne Teilvorgänge wurde bereits vorgeschlagen, geschlossene Regelkreise zu verwenden, welche aber den Gesamtkontext der Fertigungsanlage nicht berücksichtigen können.

Ferner hat sich gezeigt, dass gerade bei der Herstellung von Endlosbändern für Karkassen oder Gürtel in der Reifenindustrie auch sonstige, sich gegebenenfalls ändernde Fertigungsbedingungen starken Einfluss auf die Qualität des Fertigungsproduktes haben können. Beispielsweise können Wechsel des Materials und/oder der Umgebungstemperatur nicht zu vernachlässigende Einflüsse haben, was dazu führen kann, dass beispielsweise nach einem Materialwechsel ein langer, anstrengender und aufwendiger Optimierungsprozess erforderlich sein kann, um die geeigneten Werte für die einstellbaren Betriebsparameter (wieder) aufzufinden. Die Arbeitseigenschaften des Slitters sind beispielsweise sehr stark materialabhängig und Materialien können sich häufig ändern. Es handelt sich um einen dynamischen Prozess, in dem, insbesondere mit wenigstens einem Rundmesser, längs geschnitten wird, sodass hochrelevant ist, mit welchem Winkel die Materialbahn hereinkommt, und ob es sich um dünnes/dickes Material handelt und dergleichen.

Zusammenfassend kann also gesagt werden, dass die Optimierung hinsichtlich der Fertigungsbedingungen und der Qualität des Fertigungsproduktes bei der Herstellung von Gürtel- und Karkassenbändern in der Reifenindustrie mittels visueller Beobachtung, Protokollierung und mechanischer Feineinstellungen durch die Bedienperson erfolgt. Für eine Überprüfung ist ein Maschinenstillstand erforderlich. Die manuelle und genaue Erfassung von Eigenschaften und Betriebsparametern während des Fertigungsprozesses gestalten sich schwierig. Nachdem eine frühzeitige Erkennung von Abweichungen während des Fertigungsprozesses nicht oder nur eingeschränkt möglich ist und zudem zu Beginn eines Fertigungsprozesses ggf. noch Feinanpassungen von einstellbaren Betriebsparametern nötig sind, kann eine erhöhte Ausschussproduktion auftreten.

Der Erfindung liegt daher die Aufgabe zugrunde, eine demgegenüber verbesserte, insbesondere die Handhabung vereinfachende, Bedienfehler reduzierende, die Produktqualität verbessernde und/oder die Menge an gefertigtem Ausschuss reduzierende, Fertigungsanlage für Gürtel- und Karkassenband in der Reifenindustrie anzugeben.

Zur Lösung dieser Aufgabe ist bei einer Fertigungsanlage der eingangs genannten Art erfindungsgemäß vorgesehen, dass die Steuereinrichtung ferner ausgebildet ist, zusätzlich zu dem Basissatz wenigstens einen in einem Lernprozess ermittelten, veränderbaren Lernsatz von einstellbaren Betriebsparametern in dem Speichermittel abzuspeichern, der in Abhängigkeit wenigstens einer Benutzereingabe an der Bedieneinrichtung und/oder automatisch zur Ansteuerung auswählbar ist.

Mit dem Attribut "einstellbar" für Betriebsparameter ist vorliegend gemeint, dass der Wert des Betriebsparameters während des Herstellungsprozesses eines bestimmten, durch Vorgabeparameter beschreibbaren Fertigungsprodukts, also eines Endlos-Gürtelbandes oder Endlos-Karkassenbandes, veränderbar ist. Insbesondere handelt es sich dabei um solche Betriebsparameter, die innerhalb eines sogenannten Rezepts einstellbar sind. Ein Rezept umfasst grundsätzlich von der konkreten Fertigungsanlage unabhängige Betriebsparameter, die wenigstens das Fertigungsprodukt beschreiben (also die Vorgabeparameter umfassen) und optional zusätzlich Herstellungsbedingungen beschreiben können, beispielsweise eine gewünschte Ausbringung. Typische Vorgabeparameter können beispielsweise eine Breite des Fertigungsprodukts, eine generelle Materialangabe und/oder einen Schnittwinkel der Schere (Schneideinrichtung) umfassen. Ein Teil der Betriebsparameter eines Rezepts können auch als eine Rezept-ID zusammengefasst sein.

Betriebsparameter, die das Rezept definieren bzw. bei Veränderung dieses verändern würden, können während des Herstellungsprozesses für das Fertigungsprodukt, also der Umsetzung des Rezepts, nicht geändert werden. Die Betriebsparameter des Rezepts werden, beispielsweise in einem Rezeptdatensatz, zu Beginn des Herstellungsprozesses bereitgestellt, beispielsweise von einem Datenträger und/oder Server geladen und/oder eingegeben. Die Betriebsparameter eines Rezepts bzw. allgemein während eines Herstellungsprozesses unveränderbare Betriebsparameter können als (Teil der) Fertigungsbedingungen verstanden werden bzw. solche beschreiben.

Ein einstellbarer Betriebsparameter muss nicht unmittelbar ein (beispielsweise in Steuersignale umzusetzender) Steuerparameter sein. Vielmehr sind auch abstraktere einstellbare Betriebsparameter denkbar, aus denen die Steuereinrichtung wenigstens einen, ggf. auch mehrere, Steuerparameter ableitet. Insbesondere kann der abstraktere einstellbare Betriebsparameter für die Bedienperson intuitiver verständlich sein, beispielsweise eine Korrektur angeben, die durch einen oder mehrere Steuerparameter dann konkret erreicht wird. In manchen Fällen können auch der abstraktere einstellbare Betriebsparameter und die Steuerparameter beide als einstellbare Betriebsparameter speicherbar oder zumindest über ein Ausgabemittel ausgebbar sein.

Erfindungsgemäß wird also durch eine übergeordnete Steuerung die Möglichkeit bereitgestellt, Lernergebnisse bzw. Optimierungsergebnisse, also Ergebnisse eines Lernprozesses, zum späteren erneuten Aufruf vorzuhalten. Das bedeutet, die Ergebnisse, also insbesondere optimierte einstellbare Betriebsparameter, gehen bei einer Veränderung des Rezeptes und/oder sonstiger Fertigungsbedingungen nicht verloren, sondern werden neben dem Basissatz als wenigstens ein Lernsatz gespeichert. Der Basissatz wird also ebenso vorgehalten, um jederzeit, beispielsweise bei völlig neuen Fertigungsbedingungen, einen sicheren Ausgangspunkt vorzuhalten. Auf dieses Weise steht der Bedienperson und/oder einer automatischen Steuerlogik sowohl die Grundlage, Ergebnisse vorangehender Lernprozesse weiter zu nutzen, als auch die Möglichkeit, den sicher akzeptable Qualität liefernden Basissatz zu nutzen, bereit.

Neue Herstellungsprozesse können also, falls hierzu (oder zu zumindest teilweise vergleichbaren Fällen) schon Lernergebnisse, also Betriebsparameter eines gespeicherten Lernsatzes vorliegen, schneller zu einem Optimum hin geführt werden, insbesondere unter Reduzierung entstehenden Ausschusses in einer "Anlaufphase" und/oder Reduzierung denkbarer Bedienfehler, in denen Betriebsparameter auf eine ungünstige Art angepasst werden.

Wie im Folgenden noch genauer dargelegt werden wird, kann die Steuereinrichtung insbesondere eine Intelligenz aufweisen, also derart ausgestaltet sein, dass für den anstehenden Herstellungsprozess besonders geeignete bzw. optimierte einstellbare Betriebsparameter ermittelt und vorgeschlagen bzw. automatisch eingestellt werden können. Auch allgemein wird somit eine hervorragende Unterstützung der Bedienperson erreicht.

Die Fertigungsanlage ist ausgebildet, anlagenspezifische Einstellwerte der einstellbaren Betriebsparameter, insbesondere automatisch, während des Betriebs (in Echtzeit) zu einem Herstellungsprozess zu ermitteln und insbesondere übersichtlich zu verwalten. Lernprozesse zur Optimierung dieser Betriebsparameter werden genutzt und deren Ergebnisse produktabhängig weiterverarbeitet. Diese Verarbeitung und Verwaltung erspart der Bedienperson Zeit und die Produktqualität wird verbessert.

Insbesondere ermöglicht es die Weiternutzung von Lern- bzw. Optimierungsergebnissen, Unterbrechungen des Betriebs der Fertigungsanlage (also einen Maschinenstillstand) für Korrekturarbeiten und mögliche Feineinstellungen durch die Bedienperson zu reduzieren oder sogar gänzlich zu vermeiden. Die Lernsätze mit den neu erlernten Betriebsparametern ermöglichen weiterhin, dass die Fertigungsanlage ohne lange Wechselzeit und mit wenig Ausschuss auf einen neuen Fertigungsprozess, insbesondere ein neues Rezept, umgestellt werden kann.

Grundsätzlich kann vorgesehen sein, dass der Lernsatz wenigstens teilweise in einem benutzergeführten Lernprozess, in dem dieser mittels der Bedieneinrichtung wenigstens einen der einstellbaren Bedienparameter auf ein Optimum hin anpasst, ermittelt ist. Für wenigstens einen Teil der einstellbaren Betriebsparameter kann also vorgesehen sein, dass diese durch sukzessive Anpassung einer Bedienperson auf ein Optimum hin verbessert sind. Hierbei lernt also nun nicht nur die Bedienperson, wie sich die Anpassungen auswirken bzw. wie sich Verbesserungen der Produktqualität oder sonstiger Benchmarks erreichen lassen, sondern auch die Steuereinrichtung sowie die oder andere Bedienpersonen in der Zukunft profitieren von dem Ergebnis des Lernprozesses, indem die eingestellten Werte gespeichert werden. Es wird also Bedienerfahrung beibehalten.

In besonders bevorzugter Ausgestaltung der vorliegenden Erfindung kann vorgesehen sein, dass die Steuereinrichtung zur Ermittlung des Lernsatzes wenigstens teilweise in einem automatischen Lernprozess ausgebildet ist. Hier ist es also die Fertigungsanlage selbst, die mittels der entsprechend ausgebildeten Steuereinrichtung ein Optimum in einem automatischen Lernprozess zu erreichen sucht, was zumindest einen Teil der einstellbaren Betriebsparameter angeht. Es ist also im Rahmen der vorliegenden Erfindung auch denkbar, eine Zusammenführung von manuell und automatisch erzielten Lernergebnissen in dem Lernsatz zu erreichen.

Besonders zweckmäßig lässt sich die beschriebene Ausgestaltung mit einer geschlossenen Regelung (Closed-Loop-Regelung) kombinieren. Es kann mithin vorgesehen sein, dass die Steuereinrichtung für wenigstens einen regelbaren der einstellbaren Betriebsparameter einen geschlossenen Regelkreis umfasst, wobei Werte des wenigstens einen regelbaren Betriebsparameters für den Lernsatz in einem zumindest quasistatischen Zustand des Regelkreises aus den eingestellten Stellwerten des wenigstens einen regelbaren Betriebsparameters ermittelt werden. Dabei ist ein quasistatischer Zustand so zu verstehen, dass sich innerhalb eines definierten Zeitraums der Stellwert des wenigstens einen regelbaren Betriebsparameters nur noch innerhalb eines vordefinierten Toleranzbereichs ändert. Das Vorliegen eines quasistatischen Zustands kann eine Zusatzbedingung sein, beispielsweise beim Speichern des Lernsatzes bei einem Rezeptwechsel.

In einem geschlossenen Regelkreis, der durch eine entsprechende Regeleinrichtung umgesetzt werden kann, die Teil der Steuereinrichtung oder auch extern zu dieser sein kann, kann beispielsweise wenigstens eine sensorisch und/oder anderweitig erfasste Messgröße ausgewertet werden, um eine vorliegende Regelabweichung festzustellen. Beispielsweise kann die Messgröße mit einem entsprechenden Sollwert (Führungsgröße) verglichen werden. Eine Änderung der Regelgröße, also des Stellwerts wenigstens eines entsprechenden einstellbaren Betriebsparameters, führt auch zu einer Änderung der Messgröße, so dass aus der Regelabweichung ein aktualisierter Stellwert ermittelt werden kann.

Nachdem eine Regelung meist nicht zu einem absolut konstanten optimalen Betriebspunkt führt, kann zweckmäßig vorgesehen sein, dass als Betriebsparameterwert des wenigstens einen regelbaren Betriebsparameters für den Lernsatz ein Mittelwert der Stellwerte innerhalb des definierten Zeitraums verwendet wird. Der definierte Zeitraum kann dabei beispielsweise ein fest vorgegebenes Intervall vor einem Speicherzeitpunkt sein und/oder voraussetzen, dass ein zumindest quasistatischer Zustand vorliegt.

Der geschlossene Regelkreis kann zur Regelung auf ein Optimierungsziel ausgebildet sein. Das Optimierungsziel kann beispielsweise durch wenigstens einen Sollwert beschrieben werden, aber auch anderweitig, beispielsweise durch eine angestrebte Minimierung oder Maximierung eines Ausdrucks. Nachdem ein Optimierungsziel vorliegt, auf das hin die Regelung erfolgt, ist diese als ein Lernprozess zu verstehen, nachdem sie möglichst nahe an das Optimum führt.

Grundsätzlich können der Basissatz und der Lernsatz wenigstens einen Betriebsparameter, der sich auf eine bestimmte Fertigungskomponente, beispielsweise eine solche, an der der geschlossene Regelkreis vorliegt, bezieht, umfassen. Das bedeutet insbesondere auch, dass sich einer des wenigstens einen Lernprozesses, auf den sich der Lernsatz bezieht, ebenso komponentenbezogen sein kann, insbesondere auch unabhängig von anderen Komponenten. Bei einem automatischen Lernprozess, der sich auf eine Fertigungskomponente bezieht, können also innerhalb dessen komponentenspezifische Daten ausgewertet werden und eine Korrektur (Wert bzw. Werte wenigstens eines einstellbaren Betriebsparameters der Fertigungskomponente) im Hinblick auf ein Optimierungsziel in einer Anwendung bzw. einem Fertigungsprozess vollzogen werden. Durch die Speicherung in dem Lernsatz können der bzw. die neu ermittelten Werte des wenigstens einen einstellbaren Betriebsparameters der Fertigungskomponente gemerkt werden und in einem weiteren Fertigungsprozess wieder genutzt werden.

Mit besonderem Vorteil können die einstellbaren Betriebsparameter wenigstens einen für mehrere oder alle Fertigungskomponenten relevanten Betriebsparameter, insbesondere bei der Ansteuerung der mehreren oder aller Fertigungskomponenten verwendeten Betriebsparameter, umfassen. Hierbei wird ausgenutzt, dass die Steuereinrichtung und insbesondere der Lernsatz die Fertigungsanlage insgesamt betreffen. Es ist also eine übergeordnete Steuerung gegeben, die die Belange der Fertigungsanlage insgesamt betrifft. Beispielhafte Betriebsparameter, die für mehrere oder sogar alle Fertigungskomponenten relevant sein können, können die Fördergeschwindigkeit und/oder die Ausbringung beschreiben. Beispielsweise muss die Fördergeschwindigkeit an allen Fertigungskomponten, umgesetzt bzw. berücksichtigt werden, um einen reibungslosen Ablauf zu gewährleisten. Auf der anderen Seite kann diese auch von Eigenschaften der Fertigungskomponenten selbst abhängen bzw. durch diese beschränkt sein, beispielsweise bei schneidenden Fertigungskomponenten durch deren, beispielsweise aufgrund des Materials, mögliche Schneidgeschwindigkeit bzw. bei der Spleißeinrichtung durch deren Spleißgeschwindigkeitsbereich. Allgemein gesprochen kann die Steuereinrichtung in diesem Kontext aus ausgebildet sein, eine Verknüpfung wenigstens eines einstellbaren, insbesondere komponentenbezogenen, Betriebsparameters mit anderen anlagenspezifischen und/oder für andere Fertigungskomponenten spezifischen Betriebsparametern vorzunehmen und umgekehrt. Grundsätzlich ist selbstverständlich auch eine übergeordnete Regelung für wenigstens zwei Fertigungskomponenten denkbar. Ferner kann die Steuereinrichtung ausgebildet sein, bei Veränderung eines Betriebsparameters, die in einem komponentenspezifischen Lernprozess erfolgt, dann, wenn der Betriebsparameter auch für andere Fertigungskomponenten relevant ist, an diesen anderen Fertigungskomponenten eine entsprechende Anpassung dortiger Betriebsparameter, die mit dem veränderten Betriebsparameter verknüpft sind, vorzunehmen. So wird eine ganzheitliche Betrachtungsweise auf ein globales Optimum der Fertigung durch übergeordnete Steuerung ermöglicht.

Besonders zweckmäßig kann es sein, die einstellbaren Betriebsparameter des Lernsatzes mit Fertigungsbedingungen, insbesondere einem aktuellen Rezept, zu assoziieren.

Mit besonderem Vorteil kann daher vorgesehen sein, dass mehrere Basissätze und Lernsätze für unterschiedliche Fertigungsparameter, insbesondere Rezepte, in dem Speichermittel speicherbar sind und/oder die Steuereinrichtung ausgebildet ist, zu einem Basissatz mehrere, unterschiedlichen Fertigungsbedingungen zugeordnete Lernsätze in dem Speichermittel auswählbar vorzuhalten. Mithin können, allgemein gesprochen, Lernsätze für verschiedenste Fertigungsbedingungen gespeichert und bei Bedarf wieder zur Ansteuerung ausgewählt und verwendet werden, wenn diese Fertigungsbedingungen erneut eintreten. Dabei können Fertigungsbedingungen grundsätzlich, wie bereits dargelegt, auch umfassen, welches Rezept gerade gefertigt wird. In einer besonders vorteilhaften Ausgestaltung können Basissätze mit jeweils wenigstens einem zugeordneten Lernsatz jeweils einem bestimmten Rezept zugeordnet sein. Das bedeutet, zu (idealerweise) jedem Rezept existiert ein Basissatz und - sobald eine Speicherung erfolgt ist - wenigstens ein Lernsatz. Besonders zweckmäßig ist es dann, nachdem auch innerhalb eines Rezepts unterschiedliche Fertigungsbedingungen vorliegen können, wenn jedem Basissatz für unterschiedliche Fertigungsbedingungen mehrere Lernsätze zugeordnet sein können. So können optimierte einstellbaren Betriebsparameter für verschiedenste Situationen gelernt und in vergleichbaren Situationen, insbesondere für vergleichbare Herstellungsprozesse, wieder eingesetzt werden, was die Vorteile hinsichtlich der Produktqualität, der Vermeidung von Ausschuss, der schnellen Einstellung auf einen neuen Fertigungsprozess und der Bedienerfreundlichkeit deutlich verstärkt hervortreten lässt.

Die Fertigungsbedingungen können wenigstens teilweise durch die Steuereinrichtung automatisch erfasst werden, beispielsweise mittels wenigstens eines Sensors. Aber auch eine Erfassung bzw. Ableitung aus einer benutzerseitig bereitgestellten Bedingungsinformation ist denkbar, beispielsweise was das durchzuführende Rezept, das verwendete Material und dergleichen angeht. Die Steuereinrichtung kann insbesondere ausgebildet sein, die Fertigungsbedingungen als Bedingungsdatensatz dem Lernsatz zugeordnet zu speichern.

Zweckmäßigerweise kann die Steuereinrichtung zur Auswahl eines der Lernsätze für aktuelle Fertigungsbedingungen in Abhängigkeit eines Vergleichsergebnisses der Fertigungsbedingungen der Lernsätze mit den aktuellen Fertigungsbedingungen ausgebildet sein. Die Steuereinrichtung kann hierbei insbesondere automatisch zu Beginn eines neuen Fertigungsprozesses, der beispielsweise aufgrund eines neuen Rezeptes neuen Fertigungsbedingungen unterworfen sein kann, den Vergleich durchführen. Denkbar ist dies auch auf Anforderung durch eine Bedienperson und/oder bei einer festgestellten, insbesondere starken Veränderung der Fertigungsbedingungen während eines Fertigungsprozesses. Während eine zumindest näherungsweise vollständige Übereinstimmung der Fertigungsbedingungen ideal ist, ist auch eine Nutzung von Betriebsparametern eines Lernsatzes bei nicht vollständig bzw. nur teilweise übereinstimmenden Fertigungsbedingungen denkbar. Beispielsweise ist eine hierarchische Überprüfung denkbar, in der bei einem Rezept idealerweise die Rezept-ID, die gewünschte Breite und der gewünschte Schnittwinkel übereinstimmen sollten, wobei, wenn dies nicht möglich ist, beispielsweise auch als ausreichend angesehen werden kann, wenn Rezept-ID und Schnittwinkel übereinstimmen sollen, oder es gegebenenfalls sogar ausreichend sein kann, wenn die Rezept-ID übereinstimmt. So ist zumindest eine teilweise Übertragung gelernten Wissens möglich.

Es kann auch vorgesehen sein, dass der Vergleich wenigstens teilweise komponentenbezogen erfolgt. Beispielsweise können der Basissatz und der wenigstens eine Lernsatz auch auf wenigstens eine Fertigungskomponente bezogene Teilsätze umfassen, die dann herausgelöst bzw. alleinstehend anwendbar sind, wenn der komponentenbezogene Vergleich hinreichende Übereinstimmung anzeigt. Insbesondere kann vorgesehen sein, dass wenigstens einem Teil der Betriebsparameter relevante Fertigungsbedingungen zugeordnet sind, wobei auch einzelne Betriebsparameter eines Lernsatzes zur Einstellung auswählbar sind, wenn das Vergleichsergebnis eine Übereinstimmung hinsichtlich der relevanten Fertigungsbedingungen anzeigt. So kann optimaler technischer Nutzen aus gespeicherten Betriebsparametern der Lernsätze gezogen werden.

Die Auswahl kann vorzugsweise, zumindest in einem Automatikmodus, auch die automatische Nutzung, mithin Einstellung der Betriebsparameter des Lernsatzes (bzw. zumindest eines Teils der Betriebsparameter des Lernsatzes), zur Folge haben. Das bedeutet, die Steuereinrichtung, zumindest in einem Automatikbetriebsmodus, kann nach Auswahl wenigstens eines des wenigstens einen Lernsatzes zur Nutzung des Lernsatzes zur Ansteuerung der Fertigungskomponenten ausgebildet sein, worauf im Folgenden noch näher eingegangen werden wird.

Besonders zweckmäßig ist es ferner, wenn die Steuereinrichtung bei einer, insbesondere benutzergesteuerten, Veränderung der Fertigungsbedingungen, insbesondere der Anwahl eines neuen Rezepts zum Beginn eines neuen Fertigungsprozesses, zur Speicherung der aktuellen Betriebsparameter als den bisherigen Fertigungsbedingungen zugeordneter Lernsatz ausgebildet ist. Das automatische Abspeichern kann an Zusatzbedingungen geknüpft sein, beispielsweise wiederum das Vorliegen des Automatikmodus, das Vorliegen einer Bestätigung durch einen Bediener, eine Abweichung von einem bisherigen, denselben Fertigungsbedingungen zugeordnetem Lernsatz und/oder bei automatischem Lernprozess das Vorliegen eines zumindest quasistatischen Zustands. So wird bei jedem Wechsel der Betriebsbedingungen, insbesondere also bei einem Übergang zu einem neuen Herstellungsprozess, das bislang Gelernte, insbesondere automatisch, vorgehalten. Erfahrung wird somit konserviert, um zukünftig eine Verbesserung von Effizienz und Produktqualität zu ermöglichen.

Allgemein gesprochen kann vorgesehen sein, dass die Steuereinrichtung ausgebildet sein kann, in mehreren Betriebsmodi betrieben zu werden, wobei ein zu verwendender Betriebsmodus mittels der Bedieneinrichtung auswählbar ist. Einer der Betriebsmodi kann ein bzw. der Automatikbetriebsmodus sein, in dem die Steuereinrichtung einen Lernsatz oder Basissatz automatisch auswählt und insbesondere auch automatisch zur Nutzung einstellt, mithin die Fertigungsanlage gemäß dem entsprechenden Betriebsparametersatz ansteuert. Entsprechend kann einer der Betriebsmodi ein manueller Modus sein, in dem die Benutzereingabe verwendet wird, gleichwohl diese aber auch zur automatischen Verwendung des durch die Benutzereingabe ausgewählten Betriebsparametersatzes, also des Basissatzes oder eines des wenigstens einen Lernsatzes, führen kann.

In einer bevorzugten Weiterbildung kann vorgesehen sein, dass bei Vorliegen eines des gespeicherten Lernsatzes und von dem Lernsatz, insbesondere wenigstens durch den Regelkreis, abweichend einstellbaren aktuellen Werten für wenigstens einen variierbaren der Betriebsparameter die Steuereinrichtung zur Ermittlung einer Abweichungsinformation, die die Abweichung der aktuellen Werte der Betriebsparameter von denen des Lernsatzes anzeigt, und zur Auswertung der Abweichungsinformation durch wenigstens eine Maßnahmenbedingung ausgebildet ist, wobei die Steuereinrichtung zur Durchführung einer Maßnahme, die einer erfüllten der wenigstens einen Maßnahmenbedingung zugeordnet ist, ausgebildet ist. Die Steuereinrichtung kann also die durch die Lernsätze beschriebenen Erfahrungswerte auch weitergehend nutzen und automatisch auswerten, um aktuelle Fertigungssituationen besser beurteilen zu können. Dies gilt insbesondere für Betriebsparameter, die durch die Steuereinrichtung selbst, mithin automatisch, anpassbar sind, kann jedoch auch für seitens einer Bedienperson eingestellte Betriebsparameter gelten, wobei die Sinnhaftigkeit der Werte unter Nutzung von Werten der Betriebsparameter in Lernsätzen als Referenz beispielhaft geprüft werden kann. Mit anderen Worten und allgemein gesprochen kann die Steuereinrichtung mithin ausgebildet sein, in dem Speichermittel gespeicherte Lernsätze bei der Überwachung von Fertigungsprozessen zu verwenden, insbesondere um Abweichungen, Trends und dergleichen festzustellen und zu beurteilen. Auf diese Weise können auch Anomalien festgestellt werden. Die herangezogene Referenz, also der wenigstens eine der mehreren Lernsätze, der zur Ermittlung der Abweichungsinformation herangezogen wird, kann dabei beispielsweise so gewählt werden, dass größtmögliche Übereinstimmung hinsichtlich der Fertigungsbedingungen besteht. Hierbei kann eine Priorisierung von Fertigungsbedingungen verwendet werden.

Konkret kann wenigstens eine der wenigstens einen Maßnahme die Ausgabe einer Warnung und/oder eines Alarms an eine Bedienperson und/oder die Terminierung einer vorausschauenden Wartung betreffen und/oder wenigstens eine der wenigstens einen Maßnahme ein Abspeichern der aktuellen Werte der Betriebsparameter als Lernsatz betreffen. Sollte beispielsweise eine deutliche Abweichung in wenigstens einem einstellbaren Betriebsparameter bei ansonsten gleichen Fertigungsbedingungen oder lediglich für diesen Betriebsparameter nicht relevanten, unterschiedlichen Fertigungsbedingungen festgestellt werden, kann eine Bedienperson auf diese Unstimmigkeit hingewiesen werden und zeitnah geeignete Maßnahmen ergreifen, um die Fertigung eines hochqualitativen Produkts auch weiterhin zu sichern. Trends, beispielsweise driftende Werte für Betriebsparameter, können frühzeitig Hinweise auf eine gegebenenfalls notwendige Wartung geben. Auch hierauf kann eine Bedienperson entsprechend hingewiesen werden. So wird die Funktionsfähigkeit der Fertigungsanlage verbessert gesichert und Ausfälle durch verschleißbedingte Schäden werden reduziert. Warnungen, Alarme und Hinweise auf Wartungen können über die Bedieneinrichtung, beispielsweise ein Ausgabemittel der Bedieneinrichtung, ausgegeben werden; denkbar ist es bei einer Kommunikationsverbindung der Fertigungsanlagen bzw. zumindest der Steuereinrichtung, beispielsweise in das Internet, wie sie häufig gegeben ist, aber auch, andere Kommunikationswege zur Ausgabe an die Bedienperson zu nutzen, beispielsweise E-Mails, Mobiltelefone (beispielsweise dort installierte Apps) und dergleichen.

Bei einer ein Abspeichern betreffenden Maßnahme kann die Steuereinrichtung ausgebildet sein,
- bei ermittelbaren aktuellen Fertigungsbedingungen, die von denen beim Ermitteln des zum Vergleich herangezogenen Lernsatzes abweichen, den abzuspeichernden Lernsatz diesen aktuellen Fertigungsbedingungen zugeordnet abzuspeichern, und/oder
- bei ermittelbaren aktuellen Fertigungsbedingungen, die von denen beim Ermitteln des zum Vergleich herangezogenen Lernsatzes nicht (oder nur sehr gering innerhalb einer Toleranz) abweichen, den zum Vergleich herangezogenen Lernsatz zu ersetzen.

Die Steuereinrichtung kann also intelligent entscheiden, ob und wann Lernsätze aktualisiert bzw. neu angelegt werden sollen.

In besonders bevorzugten Ausführungsbeispielen kann vorgesehen sein, dass die Bedieneinrichtung ein Ausgabemittel, insbesondere ein Display, zur Ausgabe einer Benutzerschnittstelle aufweist, wobei die Steuereinrichtung zur Erzeugung wenigstens einer Betriebsparameterdarstellung der Benutzeroberfläche, in der der Basissatz, der Lernsatz und die aktuell eingestellten Werte der Betriebsparameter dargestellt sind, und zur Ansteuerung des Ausgabemittels zur Ausgabe der Darstellung ausgebildet ist. Auf diese Weise erfolgt also nicht nur eine Anzeige und Mitteilung für neu erlernte Werte, also einen neuen Lernsatz, mittels des Anlagen-Anzeigesystems, sondern der Bedienperson werden alle relevanten Informationen, insbesondere unmittelbar vergleichbar, in einer übersichtlichen Betriebsparameterdarstellung der Benutzeroberfläche angezeigt, sodass diese neben dem aktuellen Status der Fertigungsanlage auch mit den Werten der einstellbaren Betriebsparameter gemäß dem Basissatz und wenigstens einem Testsatz vergleichen kann. Sollten einem Rezept und/oder einem Basissatz mehrere Lernsätze zugeordnet sein, kann die Steuereinrichtung zur Auswahl des in der Betriebsparameterdarstellung anzuzeigenden Lernsatzes beispielsweise aufgrund des Vergleichsergebnisses hinsichtlich der Fertigungsbedingungen, wie es oben bereits beschrieben wurde, ausgebildet sein. Es wird dann der Lernsatz angezeigt, dessen zugeordneter Fertigungsbedingungen am besten mit den aktuellen Fertigungsbedingungen übereinstimmen. Die Steuereinrichtung kann auch ausgebildet sein, in die Betriebsparameterdarstellung Abweichungen der aktuellen Fertigungsbedingungen von den Fertigungsbedingungen des angezeigten Lernsatzes aufzunehmen. Somit kann die Bedienperson auch diesbezüglich verbessert informiert werden. Auch weitere, beispielsweise während eines Fertigungsprozesses unveränderbare Betriebsparameter können in der Betriebsparameterdarstellung selbstverständlich für eine Bedienperson wiedergegeben werden. Bevorzugt zeigt die Betriebsparameterdarstellung wenigstens ein aktuell verwendetes Rezept an.

In zweckmäßiger Ausgestaltung kann die Benutzereingabe zur Auswahl des Basissatzes und/oder des Lernsatzes und/oder zur Anforderung eines Abspeicherns aktueller Werte der Betriebsparameter als Lernsatz eine Interaktion mit der Betriebsparameterdarstellung beschreiben, wobei die Steuereinrichtung insbesondere zur Ermittlung der Betriebsparameterdarstellung derart ausgebildet ist, dass diese den Transferprozess visuell zeigt. Beispielsweise kann die Betriebsparameterdarstellung mithin Bedienelemente, die bei einer Ausbildung des Ausgabemittels als Touchscreen direkt berührt werden können und/oder mit einer Maus oder dergleichen angewählt werden können, umfassen, die ein Abspeichern eines Lernsatzes herbeiführen und/oder den Basissatz und/oder den angezeigten Lernsatz zur Einstellung auswählen lassen. Dabei ist es von besonderem Vorteil, wenn der Transferprozess auch visualisiert wird, beispielsweise in Form eines in der Betriebsparameterdarstellung hervorgehobenen oder zusätzlich angezeigten Pfeils, im Fall des Abspeicherns beispielsweise von den aktuellen Werten der einstellbaren Betriebsparameter zu den angezeigten Werten des Lernsatzes und/oder im Fall der Einstellung von den angezeigten Werten des Basissatzes bzw. Lernsatzes, je nachdem, welcher angewählt wurde, zu den aktuellen Werten der einstellbaren Betriebsparameter. Werden, worauf im Folgenden noch näher eingegangen werden wird, zuletzt vorgegebene Anfangswerte der einstellbaren Betriebsparameter (Preset-Werte) ebenso angezeigt, können auch diese beim Einstellen Ziel eines solchen Pfeils sein. Beispielsweise können die Einstellmöglichkeiten grundsätzlich, beispielsweise ausgegraut, visualisiert sein, wobei bei einem entsprechenden Transferprozess der relevante Pfeil, beispielsweise farbig, hervorgehoben wird.

Eine bevorzugte Weiterbildung der Erfindung sieht vor, dass, insbesondere bei einer permanenten Visualisierung des Transferprozesses und/oder bei zusätzlichem Anzeigen der für einen aktuellen Fertigungsprozess genutzten Anfangswerte der Betriebsparameter, die Steuereinrichtung ausgebildet ist, jeden Betriebsparameter, dessen aktueller Wert von dem Anfangswert des Betriebsparameters für den Fertigungsprozess abweicht, in der Betriebsparameterdarstellung hervorgehoben darzustellen, insbesondere gemeinsam mit dem Anfangswert. Verändert sich ein Betriebsparameter, beispielsweise durch die Verwendung eines geschlossenen Regelkreises, einen sonstigen Eingriff der Steuereinrichtung und/oder durch eine Bedienperson herbeigeführt, kann dies in der Betriebsparameterdarstellung für die Bedienperson deutlich erkennbar visualisiert werden, sodass deren Aufmerksamkeit, beispielsweise bei einer überwachenden Tätigkeit, intuitiv auf die Betriebsparameter gelenkt wird, in denen eine Wertveränderung, die relevant sein könnte, vorliegt. Beispielsweise ist es denkbar, von den Anfangswerten abweichende aktuelle Werte hervorzuheben, beispielsweise farblich, bevorzugt gemeinsam mit dem Anfangswert selbst, sodass die Abweichung unmittelbar ersichtlich wird. Dabei kann der Anfangswert in der Anzeige der jeweiligen Werte des zugehörigen Satzes, also des Basissatzes oder des Lernsatzes, hervorgehoben werden, zusätzlich oder alternativ jedoch auch in einer optionalen Anzeige der Anfangswerte. Letztere ist insbesondere dann sinnvoll, wenn beispielsweise nur ein Teil der einstellbaren Betriebsparameter aus einem der angezeigten Sätze als Anfangswerte übernommen wurde und/oder eine Anpassung durch die Bedienperson zusätzlich vorgenommen wurde. Wird der Transferprozess permanent visualisiert, kann auch auf eine Hervorhebung des zugehörigen Anfangswertes verzichtet werden, da der Verweis ja bereits vorhanden ist.

Die Betriebsparameterdarstellung kann zweckmäßigerweise mittels der Bedieneinrichtung anwählbare Reiter mit Teildarstellungen umfassen, wobei die Teildarstellungen gewählt sind aus der Gruppe umfassend eine Teildarstellung für allgemeine und/oder wichtige Betriebsparameter und Teildarstellungen für jeweils wenigstens eine Fertigungskomponente. Hierbei kann bevorzugt zunächst mit der Teildarstellung für allgemeine und/oder wichtige Betriebsparameter begonnen werden, wobei über sichtbare und insbesondere beschriftete Anteile der sonstigen Reiter diese mittels der Bedieneinrichtung zur Anzeige gebracht werden können. Gerade bei einer großen Zahl von einstellbaren Betriebsparameter, für die Werte im Basissatz und im Lernsatz hinterlegt sind, kann dies zur Verbesserung der Übersichtlichkeit zweckmäßig sein. Werden Änderungen gegenüber den Anfangswerten visualisiert, kann es zweckmäßig sein, Reiter, deren Teildarstellung zur Zeit nicht gezeigt ist, ebenso zu kennzeichnen, sodass die Bedienperson diese direkt anwählen kann. Darüber hinaus kann für jede Teildarstellung auch ein grundsätzliches, auf von dem Anfangswert abweichende einstellbare Betriebsparameter hinweisendes Informationselement Teil der Betriebsparameterdarstellung sein. In der Teildarstellung für allgemeine und/oder wichtige Betriebsparameter können bevorzugt auch die erwähnten abstrakteren einstellbaren Betriebsparameter, soweit verwendet, dargestellt werden, während daraus ableitbare Steuerparameter, die ggf. selbst einstellbare Betriebsparameter bilden können, in weiteren Teildarstellungen enthalten sein können. Die Teildarstellungen können also wenigstens teilweise Details zur allgemeineren, abstrakteren Aussage der allgemeinen Teildarstellung enthalten.

Wie für gattungsgemäße Fertigungsanlagen für Gürtelband und/oder Karkassenband grundsätzlich bekannt, kann auch die erfindungsgemäße Fertigungsanlage bevorzugt vorsehen, dass die Fertigungskomponenten
- eine Abwickelstation für ein Ausgangsband, insbesondere ein Cordband,
- eine Schere zum Abschneiden von Bandabschnitten in einem vorgegebenen Winkel und einer vorgegebenen Breite von dem Ausgangsband von der Abwickelstation,
- eine Rückzugeinrichtung zum Fördern des Ausgangsbandes durch die Schere,
- eine Spleißeinrichtung, insbesondere einen Stumpfspleißer oder einen Überlappspleißer, zum Verbinden der durch die Schere geschnittenen Bandabschnitte,
- wenigstens eine Aufwickelstation für das Gürtel- und/oder Karkassenband, und
- wenigstens eine Fördereinrichtung
   umfassen.

Ein Scherentisch der Schere kann als Materialunterstützung dienen. Darüber hinaus kann die Fertigungsanlage wenigstens eine optionale Fertigungskomponente, beispielsweise eine Beruhigungsrolle und/oder ein Reparaturband umfassen.

Eine besonders vorteilhafte Anwendung der vorliegenden Erfindung ergibt sich, wenn die Fertigungskomponenten ferner einen Slitter und/oder eine Belegevorrichtung umfassen. Wie bereits eingangs dargelegt, liegt beispielsweise bei einem Slitter eine starke und komplexe Abhängigkeit von verschiedenen Fertigungsbedingungen vor, was insbesondere auch Einfluss auf einstellbare Betriebsparameter haben kann, die für mehrere Fertigungskomponenten relevant sind. Die Einbindung in eine übergeordnete Steuerung, die ein, insbesondere auch automatisches, Beibehalten von Lernergebnissen erlaubt, bietet daher insbesondere im Hinblick auf einen Slitter auch verbesserte Startbedingungen und Anpassbarkeit für Fertigungsprozesse, erlaubt eine schnellere Umstellung und reduziert entstehenden Ausschuss bei möglichst schnell erreichter hoher Qualität.

Eine Realisierung des hier beschriebenen Steuerungskonzepts hat sich insbesondere als zweckmäßig erwiesen, wenn bei einem Slitter als Fertigungskomponente und Nutzung eines geschlossenen Regelkreises für den Slitter die Fertigungsanlage wenigstens einen Breitensensor zur Ermittlung der Breite der geslitteten Bandstreifen aufweist, aus dessen Sensordaten der Regelkreis wenigstens eine seiner Messgrößen ermittelt. Eine derartige, auf die Breiten der geslitteten Bandstreifen abstellende Regelung ist beispielsweise aus der eingangs genannten DE 20 2013 104 651 U1 bekannt, aus der sich eine konkrete Umsetzung entnehmen lässt. Optional kann allgemein in diesem Kontext als weitere Messgröße eine Breite des zusammengespleißten Endlosbands und/oder die Lage von dessen Kanten an der Zuführung zu dem Slitter mittels eines weiteren Breitensensors oder Kantensensors ermittelt werden.

Eine vorteilhafte, konkrete Ausgestaltung kann beispielsweise vorsehen, dass der Slitter ein Rahmengestell, eine Schneideinheit und einen um eine insbesondere vertikal verlaufende Achse schwenkbaren Steuerrahmen mit daran drehgelagerten Führungsrollen, über die das der Schneideinheit zuzuführende, zusammengespleißte Endlosband geführt wird, aufweist und der Regelkreis zur Verwendung eines Betriebsparameters, der den Ausrichtungswinkel des Steuerrahmens des Slitters beschreibt, und/oder eines Betriebsparameters, der die Querposition der Schneideinheit, die über eine Linearführung in einer Richtung senkrecht zur Förderrichtung des Endlosbandes linear bewegbar an dem Rahmengestell angeordnet ist, betrifft, als Stellgrößen ausgebildet ist. Eine derartige Konfiguration wird beispielhaft in der genannten DE 20 2013 104 651 U1 beschrieben. Darin sind die Breitensensoren insbesondere seitens des Slitters selbst vorgesehen und erfassen die Kanten der Bandstreifen. Zweckmäßig kann es jedoch auch sein, wenn der wenigstens eine Breitensensor an einer dem Slitter nachgeordneten Fertigungskomponente, insbesondere einer oder der unmittelbar nachfolgenden Belegevorrichtung, insbesondere einlaufseitig, angeordnet ist und/oder der Breitensensor ein zumindest eine der geslittenenen Bahnen vollständig vermessender Sensor ist.

Beispielsweise kann als abstrakterer einstellbarer Betriebsparameter bezüglich eines derartigen Slitters ein Slitterkorrekturwert verwendet werden, aus dem der Ausrichtungswinkel und/oder die Querposition der Schneideinheit als Steuerparameter (und ggf. weiterer einstellbarer Betriebsparameter) ableitbar ist. Der Slitterkorrekturwert kann beispielsweise eine Abweichung von der gewünschten Aufteilung in die Breiten der Bandstreifen sein. Sollen beispielsweise, wie häufig vorgesehen, zwei Bandstreifen gleicher Breite erzeugt werden, kann die Differenz von deren mittels des wenigstens einen Breitensensors ermittelten Breiten, geteilt durch die Zahl der Bandstreifen, den Slitterkorrekturwert bilden. Wird beispielsweise bei zwei Bandstreifen links 201 mm, rechts 199 mm gemessen, ergibt sich ein Slitterkorrekturwert von 1 mm (um diesen Wert ist die Schnittlinie zu verschieben, was konkret insbesondere durch Anpassung des Ausrichtungswinkels und/oder der Querposition erfolgen kann). Im umgekehrten Fall (rechts 201 mm, links 199 mm) ergibt sich dann ein Slitterkorrekturwert von -1 mm. Ein solcher abstrakterer, mittels des Regelkreises über nachgeordnete Steuerparameter einstellbarer Betriebsparameter ist intuitiv verständlich für eine Bedienperson.

Bei einer Belegevorrichtung zum Auflegen wenigstens eines gummierten Bandes auf das Cordband als Fertigungskomponente kann diese eine Fördereinrichtung für das Cordband sowie eine zweite Fördereinrichtung für das aufzulegende Band, sowie eine Auflegevorrichtung, mit der das Band auf das Cordband, die beide mit annähernd gleicher Geschwindigkeit einander zugeführt werden, gelegt wird, aufweisen, wobei das aufzulegende Band mit der Auflegevorrichtung drucklos auf das Cordband legbar ist, wobei eine der Auflegevorrichtung in Förderrichtung des belegten Cordband nachgeschaltete, sich senkrecht zur Förderrichtung erstreckende Andruckrolle vorgesehen ist, die über einen Spalt von der das Transportband fördernden Fördereinrichtung beanstandet ist, wobei der Spalt kleiner ist als die Gesamtdicke aus Cordband und aufgelegtem Band, und die Auflegevorrichtung linear in ihrer Querposition, die einen einstellbaren Betriebsparameter bildet, zu der Förderrichtung verstellbar ist. Mithin kann beispielsweise eine Regelung für das Auflegen, insbesondere Querversatz / Aussteuern, erfolgen. Konkret kann mit besonderem Vorteil vorgesehen sein, dass bei Verwendung wenigstens eines geschlossenen Regelkreises einer dieses wenigstens einen Regelkreises eine Materialstreifenregelung betrifft, bei welcher das aufzulegende Band durch eine optische Erfassungseinrichtung, insbesondere eine Bandkantenerfassung, zur Ermittlung wenigstens einer Messgröße vermessbar ist und die Stellgröße die Querposition der Auflegevorrichtung, welche mittels einer Verstelleinheit senkrecht zur Förderrichtung verstellbar ist, betrifft. Zusätzlich kann auch vorgesehen sein, dass die Andruckrolle zur Variation der Spaltbreite, die einen einstellbaren Betriebsparameter bildet, höhenverstellbar ist. Eine derartige Ausgestaltung ist beispielsweise aus der eingangs bereits genannten DE 20 2014 101 731 U1 bekannt, wobei die dort für Fertigungsanlagen beschriebenen Ausführungsbeispiele auch vorliegend anwendbar sind.

Grundsätzlich sind zusätzlich oder alternativ auch eine Vielzahl anderer geschlossener Regelkreise und/oder sonstiger, automatische Lernprozesse ermöglichender Steuereinheiten der Steuereinrichtung denkbar, die in Kombination mit der beschriebenen übergeordneten Steuerung zu weiteren Vorteilen führen können. Beispielsweise kann für die Schere (Schalteinrichtung) eine Sensorik vorgesehen werden, die den Schnittwinkel erfasst, diesbezüglich ebenso eine Regelung auf den gewünschten Schnittwinkel zu erlauben. Zudem sind eine Vielzahl verschiedenster abtrakterer und konkreter einstellbarer Betriebsparameter denkbar. Rein beispielhaft sei genannt, dass wenigstens einer des wenigstens einen einstellbaren Betriebsparameters zur Speicherung in dem Testsatz gewählt sein kann aus der Gruppe umfassend eine Geschwindigkeit oder Geschwindigkeitskorrektur für wenigstens eine Fördereinrichtung und/oder eine Positionierung wenigstens einer Fördereinrichtung, insbesondere eines Förderbandes, und/oder eine Position eines Spleißkopfes einer Spleißvorrichtung und/oder eine Spleißoffsetkorrektur und/oder eine Spleißwinkelkorrektur und/oder eine Spleißzeitkorrektur und/oder eine Spleißwegkorrektur und/oder eine Schneid- und/oder Schneidmessergeschwindigkeit und/oder die Aktivität wenigstens einer Zusatzeinheit, beispielsweise einer Belüftungseinheit und/oder einer Andrückeinheit.

Neben der Fertigungsanlage betrifft die vorliegende Erfindung auch ein Verfahren zum Betrieb einer Fertigungsanlage für Gürtel- und/oder Karkassenband in der Reifenindustrie, aufweisend mehrere materialbearbeitende, in Abhängigkeit von Betriebsparametern ansteuerbare Fertigungskomponenten, eine Steuereinrichtung zur Ansteuerung der Fertigungskomponenten und eine Bedieneinrichtung, wobei die Steuereinrichtung ein Speichermittel aufweist, in dem wenigstens ein festgelegter Basissatz von einstellbaren Betriebsparametern der Fertigungskomponenten gespeichert ist, und die Steuereinrichtung ausgebildet ist, in Abhängigkeit wenigstens einer Benutzereingabe an der Bedieneinrichtung und/oder automatisch den Basisdatensatz zur Ansteuerung auszuwählen. Dabei wird durch die Steuereinrichtung
- zusätzlich zu dem Basissatz wenigstens ein in einem Lernprozess ermittelter, veränderbarer Lernsatz von einstellbaren Betriebsparametern in dem Speichermittel abgespeichert und
- wenigstens einer des wenigstens einen Lernsatzes in Abhängigkeit wenigstens einer Benutzereingabe an der Bedieneinrichtung und/oder automatisch zur Ansteuerung ausgewählt.

Sämtliche Ausführungen bezüglich der erfindungsgemäßen Fertigungsanlagen lassen sich analog auf das erfindungsgemäße Verfahren übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: Fertigungskomponenten eines ersten Ausführungsbeispiels einer erfindungsgemäßen Fertigungsanlage für Karkassenband,
- Fig. 2: Fertigungskomponenten eines zweiten Ausführungsbeispiels einer erfindungsgemäßen Fertigungsanlage für Gürtelband,
- Fig. 3: eine Prinzipskizze eines Slitters als Fertigungskomponente der Fertigungsanlage,
- Fig. 4: Steuer- und Bedienkomponenten für das erste und das zweite Ausführungsbeispiel,
- Fig. 5: eine Betriebsparameterdarstellung in einer ersten Betriebssituation,
- Fig. 6: eine Betriebsparameterdarstellung in einer zweiten Betriebssituation,
- Fig. 7: einen Ablaufplan eines Ausführungsbeispiels des erfindungsgemäßen Verfahrens,
- Fig. 8: Fertigungskomponenten eines dritten Ausführungsbeispiels einer erfindungsgemäßen Fertigungsanlage für Karkassenband, und
- Fig. 9: Fertigungskomponenten eines vierten Ausführungsbeispiels einer erfindungsgemäßen Fertigungsanlage für Gürtelband.

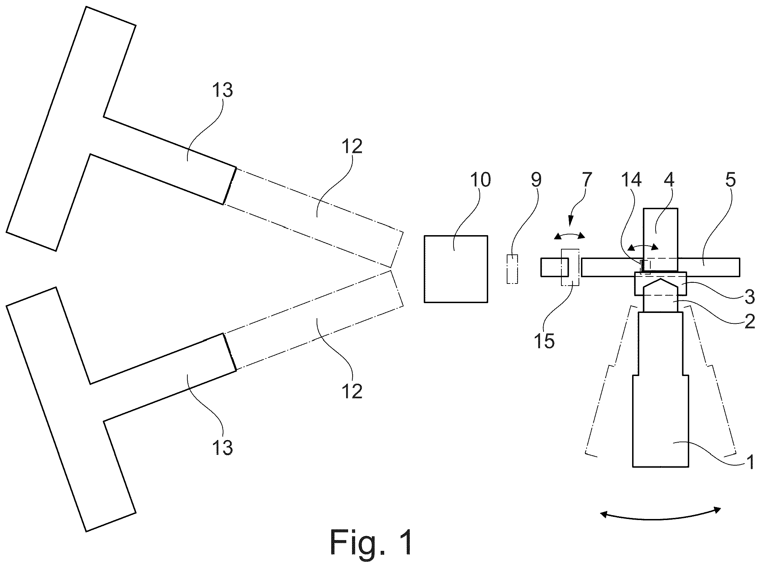

Fig. 1 zeigt ein beispielhaftes Layout für eine Karkassenanlage mit Slitter als erstes Ausführungsbeispiel einer erfindungsgemäßen Fertigungsanlage.

Die Karkassenanlage umfasst eine Abwickelstation 1, aus der das zu bearbeitende Cordband als Ausgangsband bezogen wird. In der Abwickelstation 1 werden in ein geeignetes Gestell die zu verarbeitenden Materialrollen eingehängt und ausgewickelt. Hierbei wird die zu verarbeitende Cordbahn von einer Zwischenlage (Folie, Leinen oder Ähnliches) getrennt. Diese Zwischenlage wird verwendet, um das Verkleben der hier gummierten Materialbahn zu verhindern. Um verschiedene Schneidwinkel zu realisieren, kann wie ausgeführt die Abwickelstation 1 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann.

Bei einem Doppelabwickler mit Drehtisch sind zwei Materialrollen zum Einhängen vorgesehen, eine davon wird verarbeitet, eine davon gewechselt. Daneben ist ein Doppelabwickler mit Shuttlerahmen zum Einhängen von zwei Materialrollen bekannt, von denen eine verarbeitet, eine gewechselt wird. Weiterhin sind Kassettenabwickler bekannt, in denen eine Materialrolle in eine Kassette gehängt wird und die Kassette sodann in den Abwickler transportiert wird. Diese Aufzählung ist nicht abschließend.

Der schwenkbaren Abwickelstation 1 folgt eine Schneideinrichtung bzw. Schere 3, die zum Schneiden des von der Abwickelstation 1 kommenden Cordbands dient. Die Schere 3 dient zum Abschneiden von Cordbandstreifen in einer definierten Breite und einem definierten Winkel. Als Schere 3 können verschiedene Ausgestaltungen verwendet werden:
- Guillotine-Scheren mit feststehendem Untermesser und auf- und abfahrbarbarem Obermesser,
- Rundmesserscheren mit einem feststehenden Untermesser und einen daran entlang fahrenden Rundmesser, und
- Scheren mit einem schnell rotierenden Sägemesser (ähnlich einem Kreissägenmesser).

Je nach zu verarbeitendem Material kommen verschiedene Scherenausführungen zum Einsatz. Hierbei ist entscheidend, welches Cordmaterial (ob Textil- oder Stahlcord) und in welchem Winkel dieses geschnitten werden muss (Anlagentypen Karkasse bzw. Gürtel), wobei in diesem Beispiel eine Schere 3 für eine Karkassenanlage verwendet wird.

Die Materialunterstützung 2 ist mit der Abwickelstation 1 verbunden. Sie schwenkt im Bedarfsfall gemeinsam mit dieser. Das zu verarbeitende Material liegt auf der Materialunterstützung 2 und wird auf diesem liegend in die Schere 3 gezogen. Am Anfang derMaterianunterstützung 2 oder darüber befindet sich sehr häufig eine Fördereinrichtung, die den Materialanfang in die Schere transportiert, beispielsweise eine angetriebene Förderrolle. Dies ist immer dann notwendig, wenn die Fertigungsanlage komplett entleert ist und der Anfang einer neuen Materialrolle in die Schere 3 eingelegt werden muss, oder falls zum Schwenken der Abwickelstation 1 das Material ein Stück weit aus der Schere 3 zurückgezogen wurde.

Relevant für die Scherenbauform ist insbesondere der Ablauf nach dem Schneiden. Um das geschnittene Material, also die Bandabschnitte, mit wenigen Bearbeitungsschritten in den Folgeprozess einzubinden, sind weitere Fertigungskomponenten, wie beispielsweise Bänder und Hochhalter, im Einsatz. Diese weiteren Fertigungskomponenten sollten so nah wie möglich an der der Schere 3 (welche ebenso Fertigungskomponenten bilden) befindlich sein. Das Material sollte hierzu so wenig wie möglich bewegt werden (insbesondere im Hinblick auf eine Fallhöhe), um es in geschnittener Ablageposition weiter zu verarbeiten.

Um das Material durch die Schere 3 zu fördern, kommt in den meisten Fällen eine Rückzugeinrichtung 4 als Fertigungskomponente zum Einsatz. Dabei muss beispielsweise mit einer Greifvorrichtung (Zange) sehr nahe an das Untermesser gefahren werden. Hierzu ist ein gewisser Platzbedarf erforderlich, um Kollisionen mit dem Obermesser (bzw. Rundmesser) zu vermeiden. Dadurch ergeben sich unterschiedliche Bauformen der Scheren 3.

Die Rückzugeinrichtung 4 dient zum Fördern der Materialbahn in die Schere 3 bzw. zieht das gegriffene Cordband durch die Schere 3, wie zuvor beschrieben. Die Schere 3 weist ferner ein Transportband auf, das den geschnittenen Cordbandabschnitt aufnimmt und ihn aus der Schere 3 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandabschnitt wird sodann auf eine erste Fördereinrichtung in Form eines Bandes 5 einer Spleißeinrichtung 7, hier einem Überlappspleißer 14, gegeben, und der eigentlichen Spleißeinheit zugeführt. Diese erste Fördereinrichtung 5 kann grundsätzlich auch mit der Fördereinrichtung, die der Schere 3 zugeordnet ist, zusammenfallen, so dass sich zwischen dem eigentlichen Überlappspleißer 14 und der Schere 3 nur eine, bezogen auf den Überlappspleißer 14 dann erste Fördereinrichtung befindet. Der Überlappspleißer 14 dient zum Verbinden (rein mechanisch, ohne Zuhilfenahme von Zusatzstoffen) der zuvor geschnittenen Bandabschnitte. Er ist im Winkel verschwenkbar, um das Bandmaterial in verschiedenen Winkeln verarbeiten zu können.

Optional ist noch eine weitere Spleißvorrichtung in Form eines Stumpfspleißers 15 als Teil der Spleißeinrichtung 7 vorgesehen, der anstelle des Überlappspleißers 14 verwendet werden kann, wenn diese Spleißart erforderlich ist.

Dem Überlappspleißer 14 respektive seiner zweiten Fördereinrichtung (bzw. dem alternativen Stumpfspleißer 15) nachgeschaltet ist eine optional vorzusehende Beruhigungsrolle 9. Hierbei handelt es sich lediglich um eine angetriebene Rolle, die das zusammengespleißte Cordband, das von der Spleißeinrichtung 7 kommt, in die nächste Fertigungskomponente transportiert. Hierbei erfährt das zusammengespleißte Cordband durch den Transport über die Beruhigungsrolle 9 eine Gegenbiegung. Durch die Gegenbiegung zieht sich das Material in Längsrichtung zusammen. Hintergrund ist somit, die Dehnung des Materials in Längsrichtung bei der Verarbeitung in der erfindungsgemäßen Spleißeinrichtung 7 zu reduzieren. Während des Abtransports wird in der Schere 3 bereits der nächste Bandabschnitt geschnitten.

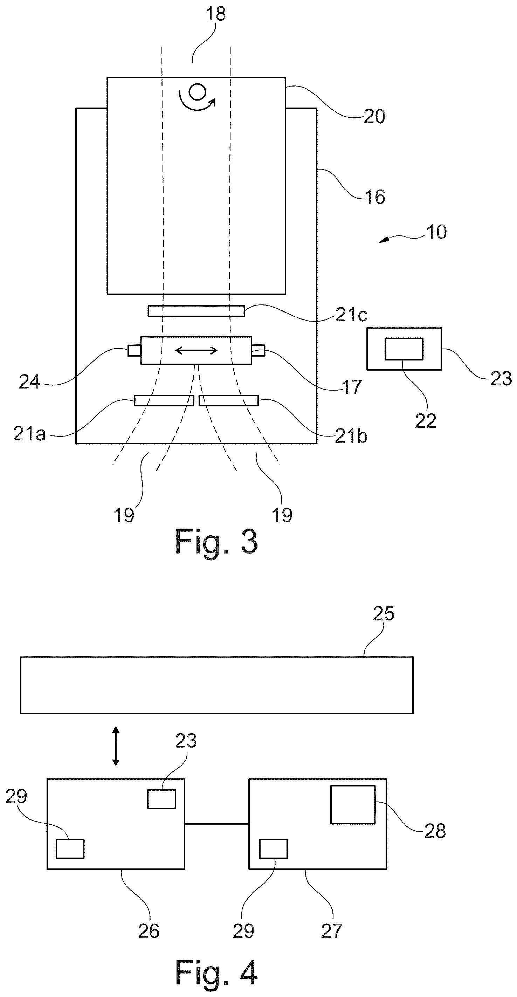

Der (optionalen) Beruhigungsrolle 9 nachgeschaltet ist sodann ein Slitter 10 als weitere Fertigungskomponente vorgesehen, der im Hinblick auf Fig. 3 näher erläutert werden wird. Dabei sei noch darauf hingewiesen, dass bei Karkassenanlagen Slitter 10 seltener verwendet werden, was jedoch dessen Einsatz nicht ausschließt.

Gemäß Fig. 1 folgen dem Slitter 10 zwei ebenfalls optionale Belegevorrichtungen 12. In dieser Fertigungskomponente werden auf die erzeugte Materialbahn, also die geslitteten Cordbandstreifen, noch weitere Gummistreifen, beispielsweise ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante ohne oder mit Überstand aufgelegt und um die Gummikante herumgelegt, um die an der Außenkante, die der Schnittkante entspricht, freiliegenden Cordfäden zu ummanteln.

In jedem Fall vorgesehen sind zwei Aufwickelstationen 13. In diesen Fertigungskomponenten werden die geslitteten Cordbandstreifen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

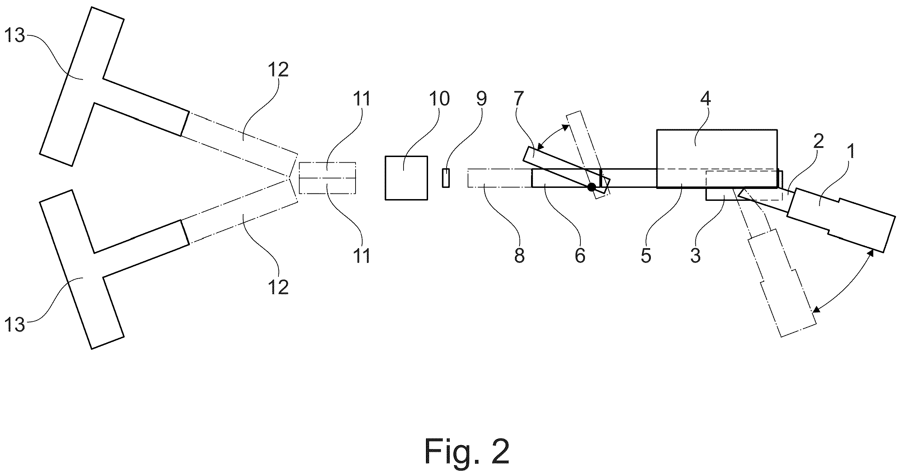

Fig. 2 zeigt ein beispielhaftes Layout einer Gürtelanlage mit Slitter als zweites Ausführungsbeispiel einer erfindungsgemäßen Fertigungsanlage. Fertigungskomponenten, die bereits in dem Layout der Fig. 1 beschrieben wurden, sind, sofern vorgesehen, mit gleichen Bezugszeichen versehen, ihre Funktion ist die gleiche wie zu Fig. 1 beschrieben.

Vorgesehen ist eine Abwickelstation 1, die hier jedoch um einen deutlich größeren Winkel verschwenkbar ist. Der Abwickler kann beliebigen Typs sein, wie bereits zuvor beschrieben.

Der Abwickelstation 1 folgt die Schere 3. Die Materialunterstützung 2 ist mit der Abwickelstation 1 verbunden. Sie schwenkt im Bedarfsfall gemeinsam mit ihr.

Die Schere 3 dient zum Abschneiden von Cordbandstreifen in einer definierten Breite und einem definierten Winkel. Als Schere 3 können die vorher beschriebenen Scherentypen, sofern sie für Gürtelanlagen geeignet sind, verwendet werden.

Der Schere 3 folgt eine Rückzugeinrichtung 4, wie es zuvor beschrieben wurde. Es dient zum Fördern der Materialbahn in die Schere 3 bzw. zieht das gegriffene Ausgangsband durch die Schere 3, wie zuvor beschrieben.

Der Cordbandabschnitt wird sodann auf die erste Fördereinrichtung (in Form eines Bandes 5) einer Spleißeinrichtung 7, die einen Überlapp- oder Stumpfspleißer umfassen kann, gegeben, und der entsprechenden eigentlichen Spleißvorrichtung zugeführt. Die Spleißvorrichtung ist um einen beachtlichen Winkel zur Einstellung des erforderlichen Spleißwinkels verschwenkbar. Sie weist ferner ein Abtransportband 6 als Fördereinrichtung auf, mit dem das zusammengespleißte Cordband der nachgeschalteten Fertigungskomponente zugeführt wird.

Optional kann der Spleißeinrichtung 7 noch ein Band 8 zum Handspleißen, also zur manuellen Verbindung der Bandabschnitte, nachgeschaltet sein. Während dieser manuellen Bearbeitung ist die automatische Spleißeinrichtung 7 außer Betrieb. Ein solches Handspleißen ist bei bestimmten Cordbandmaterialien, sehr schmalen Abschnittsbreiten oder auf Wunsch eines Kunden erforderlich. Optional kann auch in dem zweiten Ausführungsbeispiel eine Beruhigungsrolle 9 vorgesehen werden.

Als weitere Fertigungskomponente folgt ein Slitter 10. Die über den Slitter 10 erfolgende Trennung der gespleißten Materialbahn führt dazu, dass in jedem Fall zwei Aufwickelstationen 13 vorzusehen sind, denen jeweils optional jeweils eine Belegevorrichtung 12 und/oder ein Reparaturband 11 vorgeschaltet sein kann. Sollten Fehler im Band erkannt werden, können sie hier repariert werden.

Wenngleich diesen und auch folgenden Darstellungen das Cordband von rechts nach links gefördert wird ist es selbstverständlich möglich, das Layout auch in umgekehrter, spiegelbildlicher Ausführung auszulegen, also das Cordband von links nach rechts zu transportieren. Alle als optional beschriebenen Fertigungskomponenten können in unterschiedlicher Kombination zusammen mit den wesentlichen Fertigungskomponenten vorgesehen werden. Deshalb sind unterschiedliche Layouts aus allen beschriebenen Fertigungskomponenten erstellbar.

Fig. 3 zeigt rein schematisch Bestandteile eines Slitters 10, wie er in den Layouts der Fig. 1 und der Fig. 2 eingesetzt werden kann. An einem Rahmengestell 16 ist eine Schneideinheit 17 angeordnet, die zum Trennen des zugeführten zusammengespleißten Cordbandes 18 in mindestens zwei Cordbandstreifen 19 dient. Üblicherweise sind hierzu zwei miteinander zusammenwirkende Rundmesser vorgesehen. Weiterhin vorgesehen ist ein Steuerrahmen 20, der um eine vertikale Schwenkachse relativ zum Rahmengestell 16 verschwenkbar ist. Über den Steuerrahmen 20 läuft das Cordband 18. Es gelangt vom Steuerrahmen 20 in den Bereich der Schneideinheit 17, wo es in die beiden Cordbandstreifen 19 geteilt wird, wie in der Prinzipdarstellung gemäß Fig. 3 ersichtlich ist.

Zur Vermessung der Breite der beiden Cordbandstreifen 19 weist der Slitter 10 vorliegend zwei Breitensensoren 21a, 21b, einen für jeden Cordbandstreifen 19, auf. In anderen Ausführungsbeispielen kann auch eine Anordnung der Breitensensoren 21a, 21b im Einlaufbereich einer nachfolgenden Fertigungskomponente, beispielsweise einer Belegevorrichtung 12, vorgesehen sein. Die Breitensensoren 21a, 21b können die Lage von Kanten der Cordbandstreifen 19 oder die Cordbandstreifen 19 vollständig erfassen. Ein weiterer Breitensensor oder Kantensensor 21c kann die Breite und Lage des zusammengespleißten Cordbandes 18 vermessen.

Die Sensordaten der Breitensensoren 21a, 21b und ggf. 21c gehen vorliegend in einen geschlossenen Regelkreis 22 ein, der durch eine dem Slitter 10 zugeordnete Regeleinrichtung 23, die vorliegend einer noch zu diskutierenden Steuereinrichtung der Fertigungsanlage zugehörig ist, realisiert ist. In dem Regelkreis 22 werden aus den Sensordaten Messgrößen bestimmt, aus denen Stellgrößen hinsichtlich der Verschwenkung des Steuerrahmens 20 um die vertikal verlaufende Achse und/oder der Querposition der Schneideinheit 17 ermittelt werden können. Um die Schneideinheit 17 quer verstellen zu können, ist diese über eine Linearführung 24 in einer Richtung senkrecht zur Förderrichtung des zusammengespleißten Cordbandes 18 linear bewegbar an dem Rahmengestell 16 angeordnet. Der Ausrichtungswinkel des Steuerrahmens 20 und die Querposition der Schneideinheit 17 sind auch innerhalb eines bestimmten Rezepts, hier mittels der Regelung, einstellbare Betriebsparameter.

Eine konkretere, genauere Ausgestaltung des Slitters 10 wird beispielhaft in der genannten DE 20 2013 104 651 U1 beschrieben.

Der Regelkreis 22 ist ein Beispiel für einen von mehreren, in der Fertigungsanlage vorgesehenen, geschlossenen Regelkreisen, die auf ein Optimierungsziel abzielen und - bei zumindest im Wesentlichen konstanten Fertigungsbedingungen - üblicherweise in einem zumindest quasistatischen Zustand, insbesondere also einem Optimum, enden. Der Regelungsvorgang kann also als ein automatischer Lernprozess verstanden werden. Das Optimierungsziel im vorliegenden Fall ist die Erzeugung von Cordbandstreifen 19 konstanter, gleicher, vorgegebener Breite.

Ein anderes Beispiel für einen solchen Regelkreis kann bei der Belegevorrichtung 12 zum Auflegen wenigstens eines gummierten Bandes auf das Cordband (bzw. hier die Cordbandstreifen 19) vorgesehen sein. Die Belegevorrichtung 12 kann eine Fördereinrichtung für das Cordband 19 sowie eine zweite Fördereinrichtung für das aufzulegende Band und eine Auflegevorrichtung, mit der das Band auf das Cordband 19, die beide mit annähernd gleicher Geschwindigkeit einander zugeführt werden, gelegt wird, aufweisen. Dabei ist das aufzulegende Band mit der Auflegevorrichtung drucklos auf das Cordband 19 legbar. Eine der Auflegevorrichtung in Förderrichtung des belegten Cordbands 19 nachgeschaltete, sich senkrecht zur Förderrichtung erstreckende Andruckrolle ist über einen Spalt von einer das belegte Cordband fördernden Fördereinrichtung beanstandet, wobei der Spalt kleiner ist als die Gesamtdicke aus Cordband 19 und aufgelegtem Band. Eine derartige Ausgestaltung ist beispielsweise aus der eingangs bereits genannten DE 20 2014 101 731 U1 bekannt, wobei die dort für Fertigungsanlagen beschriebenen Ausführungsbeispiele auch vorliegend anwendbar sind.

Ein geschlossener Regelkreis, realisiert wiederum über eine entsprechende Regeleinrichtung der Steuereinrichtung, betrifft hier beispielhaft eine Materialstreifenregelung, bei welcher das aufzulegende Band durch eine optische Erfassungseinrichtung, insbesondere eine Bandkantenerfassung, zur Ermittlung wenigstens einer Messgröße vermessbar ist und die Regelgröße eine Querposition der Auflegevorrichtung, welche mittels einer Verstelleinheit senkrecht zur Förderrichtung verstellbar ist, betrifft.

Andere Regelungen können sich beispielsweise auf den Schnittwinkel bei der Schere 3, den Spleißwinkel oder sonstige Spleißeigenschaften bei der Spleißeinrichtung 7 und dergleichen beziehen.

Fig. 4 zeigt schematisch die Steuerungs-, Bedien- und Überwachungsstruktur der Fertigungsanlage, insbesondere also der Gürtelanlage oder der Karkassenanlage. Neben der Anordnung 25 von Fertigungskomponenten weist die Fertigungsanlage eine Steuereinrichtung 26 auf, die vorliegend die Regeleinrichtung 23 sowie gegebenenfalls weitere Regeleinrichtungen umfasst. Über die Steuereinrichtung 26 kann der Betrieb der Fertigungskomponenten der Anordnung 25 gesteuert werden. Die Steuereinrichtung 26 ist auch mit einer Bedieneinrichtung 27 verbunden, über die Benutzereingaben einer Bedienperson entgegengenommen werden können. Die Bedieneinrichtung 27 weist auch ein Ausgabemittel 28, vorliegend ein Display bzw. Bildschirm, auf. Es sei angemerkt, dass eine Benutzeroberfläche auch über einen Internetzugang oder dergleichen bereitgestellt werden kann.

Die Steuereinrichtung 26 und/oder die Bedieneinrichtung 27 umfasst darüber hinaus ein Speichermittel 29, in dem neben anderen Informationen vorliegend auch Betriebsparameter (bzw. konkret deren Werte) gespeichert werden können. Hierzu ist zunächst anzumerken, dass einem Fertigungsprozess zur Herstellung eines bestimmten Fertigungsprodukts üblicherweise ein sogenanntes Rezept zugrundeliegt, welches Vorgabeparameter, die das Fertigungsprodukt beschreiben (beispielsweise Schnittwinkel der Schere 3, gewünschte Breite) sowie gegebenenfalls weitere Betriebsparameter, beispielsweise eine zu erzielende Ausbringung, umfasst. Die durch das Rezept des aktuellen Fertigungsprozesses beschriebenen Betriebsparameter sind während des Fertigungsprozesses üblicherweise nicht veränderbar. Sie können beispielsweise an der Bedieneinrichtung eingegeben und/oder von einem Datenträger und/oder Server ausgelesen werden.

Wie bereits erwähnt, existieren jedoch auch im Rahmen eines zur Umsetzung eines bestimmten Rezept durchgeführten Fertigungsprozesses einstellbare Betriebsparameter, wobei Basiswerte, die zu akzeptabler Qualität und stabilem Ablauf des Fertigungsprozesses führen, der einstellbaren Betriebsparameter als wenigstens ein Basissatz, der vom Hersteller bereitgestellt und insbesondere rezeptspezifisch ist, in dem Speichermittel 29 abgelegt sind und mittels der Bedieneinrichtung 27 oder auch automatisch durch die Steuereinrichtung 26 aufgerufen werden können. Einstellbare Betriebsparameter können während des Betriebs durch die Steuereinrichtung 26 automatisch, beispielsweise mittels der Regelungen, angepasst werden, wenigstens teilweise aber auch durch die Bedienperson mittels der Bedieneinrichtung 27. Veränderungen der Betriebsparameter, beispielsweise ausgehend vom Basissatz für ein Rezept, dienen grundsätzlich der Optimierung des Fertigungsprozesses bzw. des Fertigungsprodukts. Sowohl bei manuellen Anpassungen als auch bei automatischen Anpassungen können diese als Lernprozess verstanden werden, da mit dem Ergebnis des Lernprozesses zumindest näher am angestrebten Optimum gearbeitet wird.

Um Ergebnisse solcher Lernprozesse, die auch als Erfahrung verstanden werden können, nicht zu verlieren und auch weitergehend gewinnbringend zu nutzen, ist die Steuereinrichtung 26 ferner ausgebildet, zusätzlich zu dem wenigstens einen Basissatz wenigstens einen in wenigstens einem Lernprozess ermittelten Lernsatz von einstellbaren Betriebsparametern in dem Speichermittel 29 abzuspeichern. So gespeicherte Lernsätze können in Abhängigkeit wenigstens einer Benutzereingabe an der Bedieneinrichtung 27 und/oder automatisch zur Ansteuerung ausgewählt werden.

Dabei ist die Steuereinrichtung 26 und ihr Steuerbetrieb übergeordnet, erfasst also alle Fertigungskomponenten der Anordnung 25. Wenigstens einer der einstellbaren Betriebsparameter betrifft mehrere oder sogar alle Fertigungskomponenten, beispielsweise eine Fördergeschwindigkeit des Bandmaterials durch die Anordnung 25.

Vorliegend sind Basissätze für verschiedene Rezepte, also rezeptspezifische Basissätze, vorgesehen. Entsprechend können auch die Lernsätze wenigstens rezeptspezifisch sein. Das aktuelle Rezept kann zumindest teilweise die Fertigungsbedingungen definieren. Gerade bei darüber hinaus gehenden Fertigungsbedingungen können sich bei Unterschieden auch unterschiedliche Optima für die einstellbaren Betriebsparameter ergeben, weshalb vorgesehen ist, dass einem Basissatz, insbesondere also auch einem Rezept, zugeordnet auch mehrere Lernsätze für unterschiedliche Fertigungsbedingungen in dem Speichermittel 29 gespeichert werden können. Fertigungsbedingungen, soweit sie nicht durch das Rezept vorgegeben sind, können wenigstens teilweise automatisch durch die Steuereinrichtung 26, beispielsweise mittels eines Sensors, erfasst werden. Ein Beispiel hierfür ist die Temperatur. Auch eine Erfassung bzw. Ableitung aus benutzerseitig bereitgestellten Bedingungsinformationen ist jedoch denkbar, beispielsweise was das verwendete Material angeht. Die Fertigungsbedingungen, unter denen ein Lernsatz ermittelt wurde und abgespeichert wird, werden als Bedingungsdatensatz dem Lernsatz zugeordnet in dem Speichermittel 29 abgespeichert.

Soll beispielsweise ein neuer Fertigungsprozess gestartet werden, können die aktuellen Fertigungsbedingungen mit den Fertigungsbedingungen der Lernsätze zum Erhalt eines Vergleichsergebnisses verglichen werden. Liegt eine (hinreichende) Übereinstimmung hinsichtlich eines bereits gespeicherten Lernsatzes vor, kann dieser ausgewählt werden. Ansonsten ist es beispielsweise denkbar, den Basissatz zu verwenden. Neben der Wiederverwendung gespeicherter Lernsätze für folgende Fertigungsprozesse ist es auch denkbar, diese bei der automatischen Überwachung des Fertigungsprozesses durch die Steuereinrichtung als Referenz heranzuziehen. Beispielsweise kann ein Lernsatz, dessen Fertigungsbedingungen am besten mit den aktuellen Fertigungsbedingungen übereinstimmen, zur Überwachung ausgewählt werden, sodass dessen Werte für die einstellbaren Betriebsparameter zur Ermittlung einer Abweichungsinformation mit den aktuellen Werten für die einstellbaren Betriebsparameter verglichen werden können. Diese Abweichungsinformation kann ausgewertet werden, insbesondere durch Maßnahmenbedingungen, denen jeweils wenigstens eine Maßnahme zugeordnet ist. Solche Maßnahmen können die Ausgabe einer Warnung und/oder eines Alarms, die Terminierung einer vorausschauenden Wartung und/oder eine Hervorhebung für überwachende Bedienpersonen betreffen. Denkbar ist es auch, als Maßnahme die aktuellen Werte der einstellbaren Betriebsparameter als Lernsatz abzuspeichern, entweder einen Lernsatz gleicher Fertigungsbedingungen ersetzend bzw. aktualisierend oder als neuer Lernsatz für die aktuellen Fertigungsbedingungen.

Vorliegend soll eine Überwachung durch eine Bedienperson und eine intuitive Informationsweitergabe an eine Bedienperson jedoch ebenso vorgesehen sein, weswegen das Ausgabemittel 28 zur Ausgabe einer Benutzerschnittstelle genutzt wird. Hinsichtlich der Betriebsparameter und insbesondere des Basissatzes und der Lernsätze kann die Steuereinrichtung 26 eine Betriebsparameterdarstellung für die Benutzeroberfläche erzeugen und an dieser ausgeben. Die Betriebsparameterdarstellung zeigt dabei den Basissatz, wenigstens einen Lernsatz und die aktuell eingestellten Werte der Betriebsparameter. Der dargestellte Lernsatz kann wiederum der sein, dessen zugeordnete Fertigungsbedingungen am besten mit den aktuellen Fertigungsbedingungen übereinstimmen, beispielsweise aufgrund des genannten Vergleichsergebnisses. Ist noch kein Lernsatz für einen Basissatz, insbesondere das aktuelle Rezept, gespeichert, können entsprechende Darstellungsfelder leergelassen werden oder aber die Werte des Basissatz des für die einstellbaren Betriebsparameter auch dort angezeigt werden.

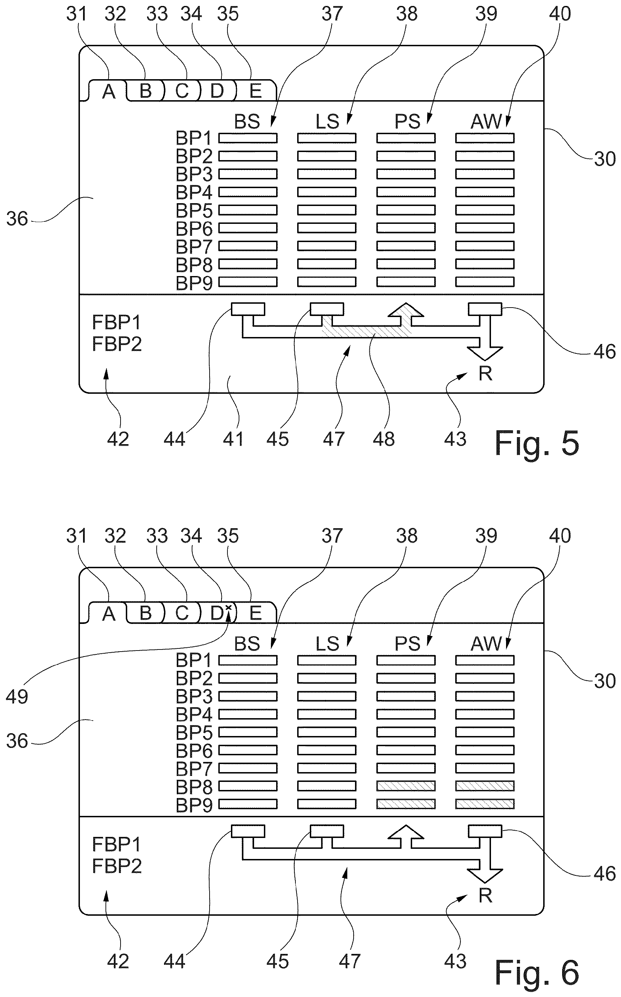

Fig. 5 zeigt beispielhaft eine mögliche Betriebsparameterdarstellung 30 der Benutzeroberfläche schematisch in einer ersten Betriebssituation. Grundsätzlich enthält die Betriebsparameterdarstellung 30 im vorliegenden Ausführungsbeispiel eine Mehrzahl von Reitern 31, 32, 33, 34, 35. Der Reiter 31 ist aktiv und betrifft vorliegend eine Teildarstellung 36 mit allgemeinen und/oder wichtigen Betriebsparametern. Die weiteren Reiter 32, 33, 34, 35 betreffen weitere Teildarstellungen und können mittels der Bedieneinrichtung 27 angewählt werden. Die weiteren Teildarstellungen können beispielsweise bestimmten Fertigungskomponenten und/oder Fertigungskomponentengruppen zugeordnet sein bzw. bestimmte Themengebiete betreffen. Auch können die weiteren Teildarstellungen Detailinformationen wiedergeben, nachdem beispielsweise die Teildarstellungen 36 Werte eines abstrakteren einstellbaren Betriebsparameters anzeigen kann, zu dem dann daraus ableitbare Werte von konkreten Steuerparametern, die auch einstellbare Betriebsparameter sein können, in einer der weiteren Teildarstellungen enthalten sein können.

Die in Fig. 5 in der Teildarstellung 36 gezeigten Kästchen 37, 38, 39, 40 stehen für angezeigte Werte einstellbarer Betriebsparameter und können als Darstellungsfelder verstanden werden, wobei die Kästchen 37 Werte des Basissatzes (in der Figur schematisiert als BS, ggf. auch "default values"), die Kästchen 38 Werte des Lernsatzes (in der Figur schematisiert als LS, ggf. auch "stored values"), die Kästchen 39 Anfangswerte, beispielsweise zu Beginn des Fertigungsprozesses, (in der Figur schematisiert PS, ggf. auch "preset values") und die Kästchen 40 aktuelle Werte (in der Figur schematisiert "AW", ggf. "actual values" oder "current values") betreffen.

In einem Anzeigebereich 41 können beispielsweise feste, während des Fertigungsprozesses unveränderliche Betriebsparameter bzw. deren Werte, vergleiche schematisierte Anzeigeelemente 42, das aktuelle Rezept, vergleiche schematisiertes Anzeigeelement 43, Bedienelemente 44, 45, 46 sowie Visualisierungselemente 47 dargestellt werden. Dabei dient das Bedienelement 44 vorliegend zur Erzeugung einer Benutzereingabe zur Verwendung des Basissatzes, das Bedienelement 45 zur Erzeugung einer Benutzereingabe zur Verwendung des Lernsatzes und das Bedienelement 46 zur Erzeugung einer Benutzereingabe zum Abspeichern der aktuellen Werte der einstellbaren Betriebsparameter in dem oder einem dem Rezept zuzuordnenden Lernsatz.

Dabei muss nicht zwangsläufig eine Benutzereingabe vorliegen, um Werte für Betriebsparameter aus Basissätzen und Lernsätzen auszuwählen und/oder Lernsätze zu speichern, sondern dies kann, insbesondere in einem noch zu diskutierenden Automatikmodus, auch durch die Steuereinrichtung 26 ohne benutzerseitiges Zutun ausgelöst werden.

Vorliegend ist eine Betriebssituation gegeben, in der die Werte der einstellbaren Betriebsparameter des Testsatzes (Kästchen 38) als Anfangswerte (Kästchen 39) verwendet werden sollen. Die entsprechende Auswahl des Testsatzes kann, wie erwähnt, automatisch oder aufgrund einer Betätigung des Bedienelements 45 erfolgt sein. Der Transferprozess wird durch Hervorhebung, beispielsweise Einfärbung, eines entsprechenden Anteils des Visualisierungselements 47, welches ständig ausgegraut vorhanden ist, visualisiert. Hierdurch wird vorliegend ersichtlich ein, beispielsweise gelber, Pfeil 48 gebildet, vergleiche Schraffur. Dieser kann auch bestehen bleiben, bis neue Anfangswerte gewählt werden.

Dadurch, dass in der Betriebsparameterdarstellung 30 sowohl die Anfangswerte als auch die aktuellen Werte der einstellbaren Betriebsparameter gezeigt werden, kann eine Bedienperson beispielsweise Vergleiche vornehmen. Dies kann bei auftretenden Abweichungen jedoch auch durch die Steuereinrichtung 26 unterstützt werden, wie durch Fig. 6, die die Betriebsparameterdarstellung 30 in einer zweiten Betriebssituation zeigt, näher erläutert wird.

Dort weichen bei zwei der in der Teildarstellung 36 dargestellten Betriebsparameter die aktuellen Werte von den Anfangswerten ab. Dies wird der Bedienperson durch beispielsweise farbliche Hervorhebung der entsprechend angezeigten Werte, vergleiche schraffierte Kästchen 39 und 40, angezeigt. Denkbar ist es auch, alternativ oder zusätzlich Abweichungen von den (ja eigentlich als optimiert gelernten) Werten der Betriebsparameter gemäß dem Lernsatz anzuzeigen.

Im Fall der Fig. 6 liegen auch Abweichungen der Werte von einstellbaren Betriebsparametern vor, die nicht in der Teildarstellung 36 dargestellt sind, sondern in einer anderen Teildarstellung, vorliegend des Reiters 34. Um die Bedienperson hierauf hinzuweisen, wird der Reiter 34 hervorgehoben, beispielsweise durch Anzeige eines entsprechenden Symbols 49.

Allgemein gesprochen ist die Steuereinrichtung 26 ausgebildet, in mehreren Betriebsmodi betrieben zu werden, wobei ein zu verwendender Betriebsmodus mittels der Bedieneinrichtung 27 auswählbar ist. Vorliegend umfassen die Betriebsmodi wenigstens einen Automatikbetriebsmodus, in dem die Steuereinrichtung 26 einen Lernsatz oder Basissatz automatisch auswählt und insbesondere auch automatisch zur Nutzung einstellt, mithin die Fertigungsanlage gemäß dem entsprechenden Betriebsparametersatz ansteuert, und einen manuellen Modus, in dem die Benutzereingabe zur Auswahl und ggf. Einstellung verwendet wird, gleichwohl diese aber auch zur automatischen Verwendung des durch die Benutzereingabe ausgewählten Betriebsparametersatzes, also des Basissatzes oder eines des wenigstens einen Lernsatzes, führen kann.

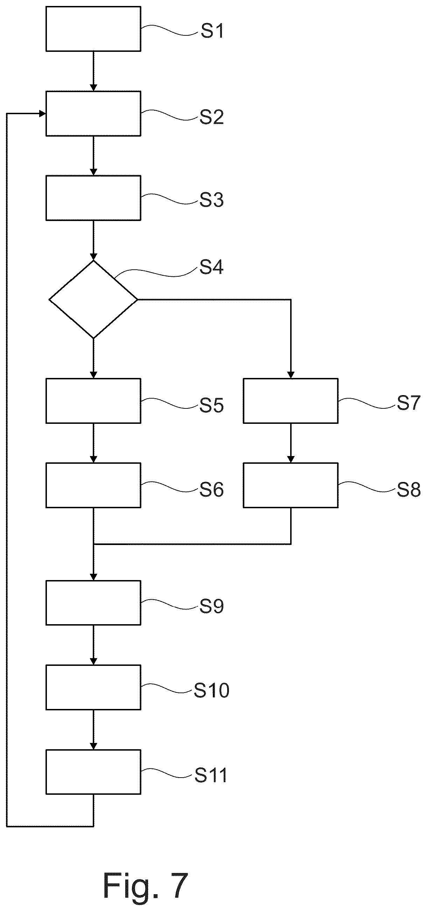

Fig. 7 zeigt einen Ablaufplan eines Ausführungsbeispiels des erfindungsgemäßen Verfahrens zum Betrieb einer erfindungsgemäßen Fertigungsanlage, wie es durch die Steuereinrichtung 26 durchgeführt werden kann, wobei an den entsprechenden Stellen zwischen dem Automatikmodus und dem manuellen Modus unterschieden wird.

Gemäß Schritt S1 wird dort ein Herstellungsvorgang gestartet, vorliegend beispielhaft zunächst ein solcher, zu dem - zumindest für die gegebenen Fertigungsbedingungen - noch kein geeigneter Lernsatz gespeichert vorliegt. Es wird daher vom Basissatz ausgegangen. Der Rezeptdatensatz, der die Betriebsparameter bzw. Fertigungsbedingungen für das aktuelle Rezept enthält, ist bekannt und wird im Speichermittel 29 geloggt.

Während des Herstellungsvorgangs werden, wie durch Schritt S2 angezeigt, verschiedene automatische Lernprozesse durch die Steuereinrichtung 26 durchgeführt, umfassend die oben beschriebenen Regelungen, insbesondere die Umsetzung des Regelkreises 22. Das bedeutet, für den letztgenannten Fall wird kontinuierlich mittels der Breitensensoren 21a, 21b die Breite der Cordbandstreifen 19 bestimmt und mit den Sollwerten verglichen bzw. der oben beschriebene Korrekturwert ermittelt. Bei einer Regelabweichung erfolgt eine entsprechende Anpassung, insbesondere des Ausrichtungswinkels des Steuerrahmens 20 und/oder der Querposition der Schneideinheit 17. Davon ausgehend, dass die Fertigungsbedingungen sich nicht oder nur sehr wenig ändern, wird irgendwann ein zumindest quasistatischer Zustand erreicht, in dem nur noch Änderungen innerhalb eines Toleranzbereichs auftreten. Die Regelung sowie jegliche andere Regelungen und sonstigen automatischen Lernprozesse werden kontinuierlich weiter durchgeführt, bis ein Rezeptwechsel ansteht, also der Fertigungsprozess zugunsten eines neuen Fertigungsprozesses beendet wird.

Dies geschieht nun im Schritt S3. Ein Rezeptwechsel kann an der Fertigungsanlage selbst, beispielsweise durch eine Bedienperson, ausgelöst werden, oder aber von einer übergelagerten Kundenanbindung.

In einem Schritt S4 wird dann überprüft, ob sich die Steuereinrichtung 26 im Automatikmodus oder im manuellen Modus befindet.

Ist der manuelle Modus aktiv, wird die Bedienperson im Schritt S5 angefragt, ob die aktuellen Betriebsparameter des nun endenden Fertigungsprozesses als Lernsatz abgespeichert werden sollen. Bei einer entsprechenden Benutzereingabe speichert die Steuereinrichtung 26 den neuen Lernsatz in dem Speichermittel 29 ab.

Ferner wird im manuellen Modus vor Beginn des neuen Fertigungsprozesses im Schritt S6 die Bedienperson angefragt, welche Werte für die einstellbaren Betriebsparameter verwendet werden sollen. Die Bedienperson kann dann beispielsweise den Basissatz oder einen gespeicherten Lernsatz für das neue Rezept auswählen oder aber nur einzelne Werte der Betriebsparameter hieraus bzw. selbst eingestellte Betriebsparameter. Sowohl für den Schritt S5 als auch für den Schritt S6 wird ein entsprechendes Know-How bei der Bedienperson vorausgesetzt.

Liegt der Automatikmodus vor, wird das Speichern und Laden der Werte für die Betriebsparameter der Steuereinrichtung 26 überlassen, was als "Smart Parameter Management" bezeichnet werden kann. Mithin entscheidet die Steuereinrichtung 26 in einem Schritt S7 im Hintergrund automatisch, ob (und gegebenenfalls welche) einstellbaren Betriebsparameter gespeichert werden sollen. Hierbei kann beispielsweise bei geschlossenen Regelkreisen überprüft werden, ob der beschriebene quasistatische Zustand vorlag. Lag bereits ein Lernsatz für die aktuellen Fertigungsbedingungen vor, kann die Steuereinrichtung 26 überprüfen, ob eine ein Aktualisieren rechtfertigende Abweichung vorliegt. Auch eine Änderung von Fertigungsbedingungen gegenüber einem bereits vorliegenden Lernsatz, beispielsweise einem, von dem ausgegangen wurde, kann überprüft werden, um einen den neuen Fertigungsbedingungen zugeordneten Lernsatz abzuspeichern.

In einem Schritt S8 wählt die Steuereinrichtung 26 vor Beginn des neuen Herstellungsprozesses automatisch einen zu verwendenden Betriebsparametersatz aus, beispielsweise bei vorliegenden Lernsätzen den, dessen zugeordnete Fertigungsbedingungen am besten mit den aktuellen Fertigungsbedingungen übereinstimmen oder aber bei nicht hinreichender Übereinstimmung oder noch keinem vorliegenden Lernsatz den Basissatz. Es sei angemerkt, dass in Ausführungsbeispielen auch eine teilweise Übernahme von Werten der einstellbaren Betriebsparameter aus einem Lernsatz denkbar ist, beispielsweise wenn einstellbaren Betriebsparametern Fertigungsbedingungen zugeordnet sind und/oder ein komponentenbezogener Vergleich erfolgt.

In einem Schritt S9 wird dann der neue Fertigungsprozess gestartet. Aufgrund der Nutzung von Ergebnissen vorangehender Lernprozesse erfolgt die Umstellung auf das neue Rezept in kürzerer Zeit zu hochqualitativen Produkten und mit weniger Ausschuss.

Nachdem für dieses Rezept bereits Testsätze vorliegen, die als Referenz dienen können, erfolgt in einem Schritt S10 die bereits beschriebene Überwachung hinsichtlich von Abweichungen, beispielsweise zur Detektion von Anomalien, zur vorausschauenden Auslösung von Wartungen und dergleichen. Auch kann diese Überwachung dazu führen, dass bereits im laufenden Fertigungsprozess Lernsätze aktualisiert und/oder neu gespeichert werden, insbesondere im Automatikmodus.

In einem Schritt S11 erfolgt, gegebenenfalls auch in Abhängigkeit der Ergebnisse des Schritts S10, auch die Visualisierung der Betriebsparameter in der Betriebsparameterdarstellung 30. Diese Visualisierung steht auch im Automatikmodus zur Verfügung. Auch für das neue Rezept erfolgen selbstverständlich weiterhin die automatischen Lernprozesse, insbesondere Regelungen, weswegen neben den Schritten S10 und S11 auch der Schritt S2 kontinuierlich bis zum Ende des Fertigungsprozesses durchgeführt wird.

Es sei angemerkt, dass auch andere Betriebsmodi denkbar sind, beispielsweise solche, in denen vom Benutzer eine Bestätigung für von der Steuereinrichtung 26 ausgewählte Betriebsparametersätze oder allgemein Werte für einstellbare Betriebsparameter angefordert wird und dergleichen.

Konkret können die Basissätze und Lernsätze in dem Speichermittel 29 beispielsweise in einer entsprechenden Datenbank, insbesondere einer SQL-Datenbank, gespeichert werden.

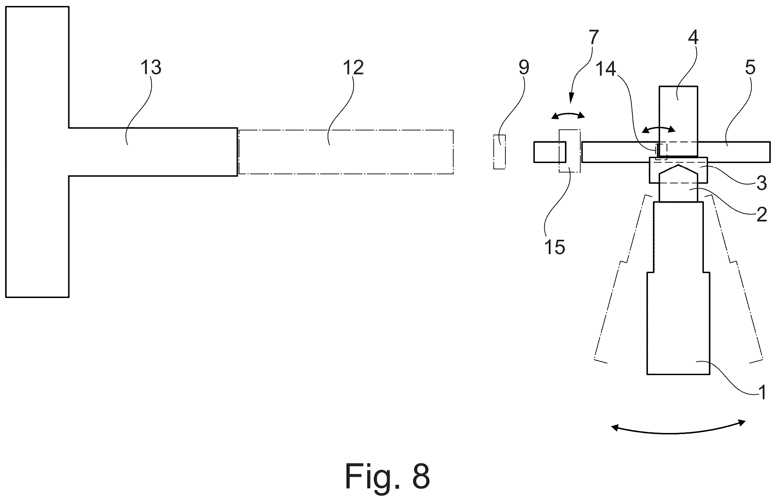

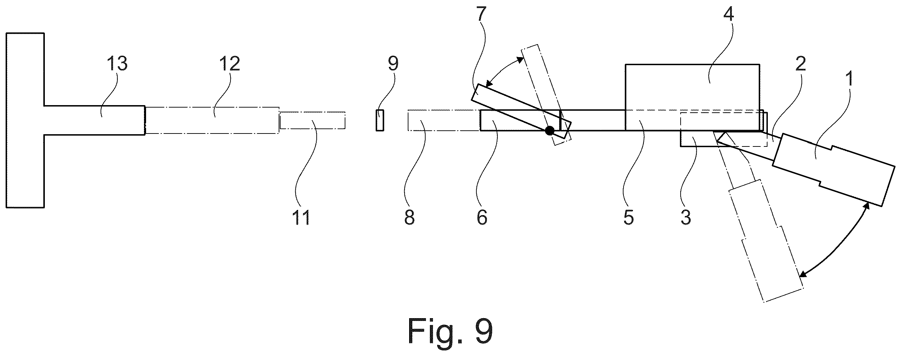

Fig. 8 und Fig 9 zeigen weitere beispielhafte Ausführungsbeispiele erfindungsgemäßer Fertigungsanlagen für Karkassenband respektive Gürtelband, die ohne einen Slitter 10 arbeiten. Dennoch lässt sich das erfindungsgemäße Steuerungskonzept selbstverständlich entsprechend anwenden. Die Bezugszeichen sind dabei für gleiche Komponenten wie in den Figuren 1 und 2 gewählt. Das Beruhigungsrolle 9, die Belegevorrichtung 12 und das Reparaturband 11 sind auch in diesen Ausführungsbeispielen optional.

Ersichtlich ist in diesen Fällen aufgrund des nicht genutzten Slitters 10 jeweils nur eine Aufwickelstation 13 vorgesehen.

## Patentansprüche

1. Fertigungsanlage für Gürtel- und/oder Karkassenband in der Reifenindustrie, aufweisend mehrere materialbearbeitende, in Abhängigkeit von Betriebsparametern ansteuerbare Fertigungskomponenten, eine Steuereinrichtung (26) zur Ansteuerung der Fertigungskomponenten und eine Bedieneinrichtung (27), wobei die Steuereinrichtung (26) und/oder die Bedieneinrichtung (27) ein Speichermittel (29) aufweist, in dem wenigstens ein festgelegter Basissatz von einstellbaren Betriebsparametern der Fertigungskomponenten gespeichert ist, und ausgebildet ist, in Abhängigkeit wenigstens einer Benutzereingabe an der Bedieneinrichtung (27) und/oder automatisch den Basissatz zur Ansteuerung auszuwählen,
**dadurch gekennzeichnet,**
**dass** die Steuereinrichtung (26) ferner ausgebildet ist, zusätzlich zu dem Basissatz wenigstens einen in einem Lernprozess ermittelten, veränderbaren Lernsatz von einstellbaren Betriebsparametern in dem Speichermittel (29) abzuspeichern, der in Abhängigkeit wenigstens einer Benutzereingabe an der Bedieneinrichtung (27) und/oder automatisch zur Ansteuerung auswählbar ist.

2. Fertigungsanlage nach Anspruch 1, **dadurch gekennzeichnet, dass** die Steuereinrichtung (26) zur Ermittlung des Lernsatzes wenigstens teilweise in einem automatischen Lernprozess ausgebildet ist.

3. Fertigungsanlage nach Anspruch 2, **dadurch gekennzeichnet, dass** die Steuereinrichtung (26) für wenigstens einen regelbaren der Betriebsparameter einen geschlossenen Regelkreis (22) umfasst, wobei Werte des wenigstens einen regelbaren Betriebsparameters für den Lernsatz in einem zumindest quasistatischen Zustand des Regelkreises (22) aus den eingestellten Stellwerten des wenigstens einen regelbaren Betriebsparameters ermittelt wird.

4. Fertigungsanlage nach einem der vorangehenden Ansprüche, **dadurch gekennzeichnet, dass** mehrere Basissätze und Lernsätze für unterschiedliche Fertigungsparameter, insbesondere Rezepte, in dem Speichermittel (29) speicherbar sind und/oder die Steuereinrichtung (26) ausgebildet ist, zu einem Basissatz mehrere, unterschiedlichen Fertigungsbedingungen zugeordnete Lernsätze in dem Speichermittel (29) auswählbar vorzuhalten.

5. Fertigungsanlage nach Anspruch 4, **dadurch gekennzeichnet, dass** die Steuereinrichtung (26) zur Auswahl eines der Lernsätze für aktuelle Fertigungsbedingungen in Abhängigkeit eines Vergleichsergebnisses der Fertigungsbedingungen der Lernsätze mit den aktuellen Fertigungsbedingungen ausgebildet ist und/oder dass die Steuereinrichtung (26) bei einer, insbesondere benutzergesteuerten, Veränderung der Fertigungsbedingungen, insbesondere der Anwahl eines neues Rezepts zum Beginn eines neuen Fertigungsprozesses, zur Speicherung der aktuellen Betriebsparameter als den bisherigen Fertigungsbedingungen zugeordneter Lernsatz ausgebildet ist.

6. Fertigungsanlage nach einem der vorangehenden Ansprüche, **dadurch gekennzeichnet, dass** bei Vorliegen eines des gespeicherten Lernsatzes und von dem Lernsatz, insbesondere wenigstens durch den Regelkreis (22), abweichend einstellbaren aktuellen Werten für wenigstens einen variierbaren der Betriebsparameter die Steuereinrichtung (26) zur Ermittlung einer Abweichungsinformation, die die Abweichung der aktuellen Werte der Betriebsparameter von denen des Lernsatzes anzeigt, und zur Auswertung der Abweichungsinformation durch wenigstens eine Maßnahmenbedingung ausgebildet ist, wobei die Steuereinrichtung (26) zur Durchführung einer einer erfüllten der wenigstens einen Maßnahmenbedingung zugeordneten Maßnahme ausgebildet ist.

7. Fertigungsanlage nach Anspruch 6, **dadurch gekennzeichnet, dass** wenigstens eine der wenigstens einen Maßnahme die Ausgabe einer Warnung und/oder eines Alarms an eine Bedienperson und/oder die Terminierung einer vorausschauenden Wartung betrifft und/oder wenigstens eine der wenigstens einen Maßnahme ein Abspeichern der aktuellen Werte der Betriebsparameter als Lernsatz betrifft.

8. Fertigungsanlage nach einem der vorangehenden Ansprüche, dass die Bedieneinrichtung (27) ein Ausgabemittel (28), insbesondere ein Display, zur Ausgabe einer Benutzerschnittstelle aufweist, wobei die Steuereinrichtung (26) zur Erzeugung wenigstens eine Betriebsparameterdarstellung (30) der Benutzeroberfläche, in der der Basissatz, der Lernsatz und die aktuell eingestellten Werte der Betriebsparameter dargestellt sind, und zur Ansteuerung des Ausgabemittels (28) zur Ausgabe der Darstellung ausgebildet ist.

9. Fertigungsanlage nach Anspruch 8, **dadurch gekennzeichnet, dass** die Steuereinrichtung (26) ausgebildet ist, jeden Betriebsparameter, dessen aktueller Wert von dem Anfangswert des Betriebsparameters für den Fertigungsprozess abweicht, in der Betriebsparameterdarstellung (30) hervorgehoben darzustellen, insbesondere gemeinsam mit dem Anfangswert.

10. Fertigungsanlage nach einem der vorangehenden Ansprüche, **dadurch gekennzeichnet, dass** die Fertigungskomponenten
- eine Abwickelstation (1) für ein Ausgangsband, insbesondere ein Cordband,
- eine Schere (3) zum Abschneiden von Bandabschnitten in einem vorgegebenen Winkel und einer vorgegebenen Breite von dem Ausgangsband von der Abwickelstation (1),
- eine Rückzugeinrichtung (4) zum Fördern des Ausgangsbandes durch die Schere (3),
- eine Spleißeinrichtung (7), insbesondere ein Stumpfspleißer (15) oder ein Überlappspleißer (14), zum Verbinden der durch die Schere (3) geschnittenen Bandabschnitte,
- wenigstens eine Aufwickelstation (13) für das Gürtel- und/oder Karkassenband, und
- wenigstens eine Fördereinrichtung
umfassen.

11. Fertigungsanlage nach Anspruch 10, **dadurch gekennzeichnet, dass** die Fertigungskomponenten ferner einen Slitter (10) und/oder eine Belegevorrichtung (11) umfassen.

12. Fertigungsanlange nach Anspruch 11, **dadurch gekennzeichnet, dass** bei einem Slitter (10) als Fertigungskomponente und Nutzung eines geschlossenen Regelkreises (22) für den Slitter (10) die Fertigungsanlage wenigstens einen Breitensensor (21a, 21b) zur Ermittlung der Breite der geslitteten Bandstreifen aufweist, aus dessen Sensordaten der Regelkreis (22) wenigstens eine seiner Messgrößen ermittelt.

13. Fertigungsanlage nach Anspruch 12, **dadurch gekennzeichnet, dass** der Slitter (10) ein Rahmengestell (16), eine Schneideinheit (17) und einen um eine insbesondere vertikal verlaufende Achse schwenkbaren Steuerrahmen (20) mit daran drehgelagerten Führungsrollen, über die das der Schneideinheit (17) zuzuführende, zusammengespleißte Endlosband (18) geführt wird, aufweist und der Regelkreis (22) zur Verwendung eines Betriebsparameters, der den Ausrichtungswinkel des Steuerrahmens (20) des Slitters (10) beschreibt, und/oder eines Betriebsparameters, der die Querposition der Schneideinheit (17), die über eine Linearführung (24) in einer Richtung senkrecht zur Förderrichtung des Endlosbandes (18) linear bewegbar an dem Rahmengestell (16) angeordnet ist, betrifft, als Stellgrößen ausgebildet ist.

14. Fertigungsanlage nach einem der Ansprüche 11 bis 13, **dadurch gekennzeichnet, dass** bei einer Belegevorrichtung (11) zum Auflegen wenigstens eines gummierten Bandes auf das Cordband (19) als Fertigungskomponente diese eine Fördereinrichtung für das Cordband (19) sowie eine zweite Fördereinrichtung für das aufzulegende Band, sowie eine Auflegevorrichtung, mit der das Band auf das Cordband (19), die beide mit annähernd gleicher Geschwindigkeit einander zugeführt werden, gelegt wird, aufweist, und das aufzulegende Band mit der Auflegevorrichtung drucklos auf das Cordband (19) legbar ist, wobei eine der Auflegevorrichtung in Förderrichtung des belegten Cordbands (19) nachgeschaltete, sich senkrecht zur Förderrichtung erstreckende Andruckrolle vorgesehen ist, die über einen Spalt von der das belegte Cordband fördernden Fördereinrichtung beanstandet ist, wobei der Spalt kleiner ist als die Gesamtdicke aus Cordband und aufgelegtem Band, und wobei die Auflegevorrichtung linear in ihrer Querposition, die einen einstellbaren Betriebsparameter bildet, zu der Förderrichtung verstellbar ist.

15. Fertigungsanlage nach Anspruch 14, **dadurch gekennzeichnet, dass** bei Verwendung wenigstens eines geschlossenen Regelkreises einer dieses wenigstens einen Regelkreises eine Materialstreifenregelung betrifft, bei welcher das aufzulegende Band durch eine optische Erfassungseinrichtung, insbesondere eine Bandkantenerfassung, zur Ermittlung wenigstens einer Messgröße vermessbar ist und die Regelgröße eine Querposition der Auflegevorrichtung, welche mittels einer Verstelleinheit senkrecht zur Förderrichtung verstellbar ist, betrifft.

16. Verfahren zum Betrieb einer Fertigungsanlage für Gürtel- und/oder Karkassenband in der Reifenproduktion, aufweisend mehrere materialbearbeitende, in Abhängigkeit von Betriebsparametern ansteuerbare Fertigungskomponenten, eine Steuereinrichtung (26) zur Ansteuerung der Fertigungskomponenten und eine Bedieneinrichtung (27), wobei die Steuereinrichtung (26) und/oder die Bedieneinrichtung (27) ein Speichermittel (29) aufweist, in dem wenigstens ein festgelegter Basissatz von einstellbaren Betriebsparametern der Fertigungskomponenten gespeichert ist, und ausgebildet ist, in Abhängigkeit wenigstens einer Benutzereingabe an der Bedieneinrichtung (27) und/oder automatisch den Basisdatensatz zur Ansteuerung auszuwählen, **dadurch gekennzeichnet,**
**dass** durch die Steuereinrichtung (26)
- zusätzlich zu dem Basissatz wenigstens ein in einem Lernprozess ermittelter, veränderbarer Lernsatz von einstellbaren Betriebsparametern in dem Speichermittel (29) abgespeichert wird und
- wenigstens einer des wenigstens einen Lernsatzes in Abhängigkeit wenigstens einer Benutzereingabe an der Bedieneinrichtung (27) und/oder automatisch zur Ansteuerung ausgewählt wird.
